# EUROPEAN PATENT APPLICATION

(11) **EP 4 600 225 A1**
(43) Date of publication of application: **13.08.2025**
(21) Application number: 23874721.6
(22) Date of filing: 26.09.2023
(51) Int. Cl.: C03B 19/00, C03B 8/00, C03B 11/00, G02B 3/00

(54) **DEVICE FOR PRODUCING GLASS, GLASS, OPTICAL SYSTEM, OPTICAL DEVICE, AND METHOD FOR PRODUCING GLASS**

(30) Priority: 06.10.2022 JP 2022161638
(71) Applicant: NIKON CORPORATION, Tokyo 140-8601 (JP)
(72) Inventor: YOSHIMOTO, Kohei, Tokyo 140-8601 (JP); SHIBATA, Norio, Tokyo 140-8601 (JP); TAKASU, Shuhei, Tokyo 140-8601 (JP); KAWASHIMA, Tatsunori, Tokyo 140-8601 (JP); OZEKI, Ayumi, Tokyo 140-8601 (JP)
(74) Representative: Viering, Jentschura & Partner mbB Patent- und Rechtsanwälte
(86) International application number: PCT/JP2023/034928
(87) International publication number: WO 2024/075593

(57) **Abstract**

A glass manufacturing apparatus configured to manufacture glass through a process of lowering the temperature of a non-contact supported glass material, comprising:
a heating unit configured to heat the glass material; and
a forming unit configured to form the molten glass material while its temperature decreases.

## Description

### TECHNICAL FIELD

The present invention relates to a glass manufacturing apparatus, glass, an optical system, an optical device, and a glass manufacturing method. The present invention claims priority to Japanese Patent Application No. 2022-161638, filed on October 6, 2022, the contents of which are incorporated by reference herein in its entirety in designated states where the incorporation of documents by reference is approved.

The present invention relates to a glass manufacturing apparatus, glass, an optical system, an optical device, and a glass manufacturing method.

### BACKGROUND ART

For example, Patent Document 1 discloses a method for manufacturing optical glass using a laser floating furnace. In such a laser floating furnace, it is required to stably float the glass sample using floating gas.

### Citation List

### Patent Literature

PTL 1:JP2014-196236 A

### Summary of Invention

An aspect of the present invention is a glass manufacturing apparatus configured to manufacture glass through a process of lowering the temperature of a non-contact supported glass material. The apparatus comprises a heating unit configured to heat the glass material, a heating control unit configured to control the amount of heating applied to the glass material by the heating unit, and a forming unit configured to form the molten glass material whose temperature has changed based on the heating amount control by the heating control unit.

Another aspect of the present invention is a glass manufacturing apparatus configured to manufacture glass through a process of lowering the temperature of a non-contact supported glass material. The apparatus comprises a heating unit configured to heat the glass material, a heating control unit configured to control the amount of heating applied to the glass material by the heating unit, and a forming unit configured to form the molten glass material whose temperature has changed based on the heating amount control by the heating control unit.

Another aspect of the present invention is glass manufactured using the above-described glass manufacturing apparatus.

Another aspect of the present invention is an optical system using the above-described glass.

Another aspect of the present invention is an optical device using the above-described optical system.

Another aspect of the present invention is a glass manufacturing method that manufactures glass using the above-described glass manufacturing apparatus.

Another aspect of the present invention is a glass manufacturing method configured to manufacture glass through a process of lowering the temperature of a non-contact supported glass material. The method includes a melting step configured to heat and melt the glass material using a heating unit and a forming step configured to form the molten glass material while its temperature decreases.

Another aspect of the present invention is a glass manufacturing method for manufacturing glass through a process of lowering the temperature of a non-contact supported glass material. The method includes a melting step of heating and melting the glass material, a cooling step of lowering the temperature of the molten glass to obtain the glass, a reheating step of heating and melting the glass, and a forming step of forming the molten glass while its temperature decreases.

Another aspect of the present invention is a glass manufacturing method for manufacturing glass through a process of lowering the temperature of a non-contact supported glass material. The method includes a melting step of heating and melting the glass material using a heating unit, a heating control step of controlling the amount of heating applied to the glass material by the heating unit, and a forming step of forming the molten glass material whose temperature has changed based on the heating amount control by the heating control step.

Another aspect of the present invention is a glass manufacturing apparatus configured to manufacture glass by cooling glass material. The apparatus comprises a support member configured to non-contact support the molten glass material, and a stage to which the support member is fixed. The support member is detachable from the stage.

### BRIEF DESCRIPTION OF THE DRAWINGS

FIG. 1 illustrates a schematic diagram of a glass manufacturing apparatus equipped with a floating furnace including a holding member according to an embodiment of the present invention.
FIG. 2 illustrates a schematic cross-sectional diagram showing a state in which a sample is heated while floating on the support section in FIG. 1.
FIG. 3 illustrates a schematic cross-sectional diagram showing an example of the floating furnace vicinity in the first embodiment. FIG. 3A illustrates a schematic cross-sectional diagram showing an example of the floating furnace vicinity in the first embodiment, FIG. 3B illustrates a view of the forming member 31 as seen from the support member 12 side (first view), and FIG. 3C illustrates a view of the forming member 31 as seen from the support member 12 side (second view).
FIG. 4 illustrates a schematic cross-sectional diagram showing an example of the floating furnace vicinity in the second embodiment.
FIG. 5 illustrates a schematic cross-sectional diagram showing an example of the floating furnace vicinity in a modified example of the second embodiment.
FIG. 6 illustrates a schematic cross-sectional diagram showing an example of the floating furnace vicinity in the third embodiment.
FIG. 7 illustrates a schematic cross-sectional diagram showing an example of the floating furnace vicinity in the fourth embodiment.
FIG. 8 illustrates a schematic cross-sectional diagram showing an example of the floating furnace vicinity in the fifth embodiment. FIG. 8A illustrates a first schematic cross-sectional diagram showing an example of the floating furnace vicinity in the fifth embodiment, and FIG. 8B illustrates a second schematic cross-sectional diagram showing an example of the floating furnace vicinity in the fifth embodiment.
FIG. 9 illustrates a schematic cross-sectional diagram showing an example of the floating furnace vicinity in the sixth embodiment. FIG. 9A illustrates a first schematic cross-sectional diagram showing an example of the floating furnace vicinity in the sixth embodiment, FIG. 9B illustrates a modified example of the forming member 38, FIG. 9C illustrates a third schematic cross-sectional diagram showing an example of the floating furnace vicinity in the sixth embodiment, and FIG. 9D illustrates a modified example of the method for forming sample U using the forming member 383.
FIG. 10 illustrates a schematic cross-sectional diagram showing an example of the floating furnace vicinity in the seventh embodiment. FIG. 10A illustrates a schematic cross-sectional diagram showing an example of the forming member in the seventh embodiment, and FIG. 10B illustrates a schematic cross-sectional diagram showing a modified example of the forming member in the seventh embodiment.
FIG. 11 illustrates a schematic cross-sectional diagram showing an example of the floating furnace vicinity in the eighth embodiment. FIG. 11A illustrates a schematic cross-sectional diagram showing an example of the forming unit in the eighth embodiment, and FIG. 11B illustrates a schematic cross-sectional diagram showing a modified example of the forming unit in the eighth embodiment.
FIG. 12 illustrates a diagram for explaining the floating furnace in the ninth embodiment. FIG. 12A illustrates a schematic cross-sectional diagram showing an example of the forming unit in the ninth embodiment, and FIG. 12B illustrates a schematic cross-sectional diagram for explaining forming using the forming unit in the ninth embodiment.
FIG. 13 illustrates a schematic cross-sectional diagram showing an example of the floating furnace vicinity in the tenth embodiment. FIG. 13A illustrates a schematic cross-sectional diagram showing an example of the floating furnace vicinity in the tenth embodiment, and FIG. 13B illustrates a schematic cross-sectional diagram showing a modified example of the floating furnace in the tenth embodiment.
FIG. 14 illustrates a diagram for explaining the heating control of sample U in the first to tenth embodiments. FIG. 14A illustrates a first diagram showing an example of the standard heating amount, FIG. 14B illustrates a second diagram showing an example of the standard heating amount, and FIG. 14C illustrates a diagram showing an example of a state where the heating amount is reduced.
FIG. 15 illustrates a diagram showing measurement results of samples obtained in Examples 1 and 2.
FIG. 16 illustrates a diagram showing measurement results of sample U obtained in Examples 3 to 5.
FIG. 17 illustrates a diagram showing measurement results of samples U1 and U2 obtained in Example 6. FIG. 17A illustrates a diagram showing measurement results of sample U1, and FIG. 17B illustrates a diagram showing measurement results of sample U2.
FIG. 18 illustrates a perspective view showing an example in which the optical device according to each embodiment is used as an imaging device.
FIG. 19 illustrates a front view showing another example in which the optical device according to each embodiment is used as an imaging device.
FIG. 20 illustrates a rear view showing another example in which the optical device according to each embodiment is used as an imaging device.
FIG. 21 illustrates a block diagram showing an example in which the optical device according to each embodiment is used as a multiphoton microscope.
FIG. 22 illustrates a schematic diagram showing an example of a bonded lens according to each embodiment.

### DETAILED DESCRIPTION

The embodiments of the present invention (hereinafter referred to as "this embodiment") will be described below. The following embodiments are examples provided to explain the present invention and are not intended to limit the present invention to the content described below.

In the drawings, the same reference numerals are assigned to the same elements, and redundant explanations are omitted. Furthermore, unless otherwise specified, positional relationships such as top, bottom, left, and right are based on those shown in the drawings. Additionally, the dimensional ratios in the drawings are not limited to those illustrated.

Terms with "approximately" indicate that they include the meaning of the term without "approximately" within the scope of common technical knowledge in the field. This also applies in reverse. For example, the term "circle", even if not prefixed with "approximately," inherently includes the meaning of "approximately circular" unless it contradicts the gist of the invention.

The term "cross-section" in "cross-sectional view" or "cross-sectional perspective" refers to a cross-section passing through the center or centroid of the concave surface R when it is placed on a horizontal plane that is orthogonal to the direction of gravity with the concave surface R of the later-described support member 12 facing upward, and this cross-section is perpendicular to the horizontal plane.

### <Overview of Glass Manufacturing Apparatus 10>

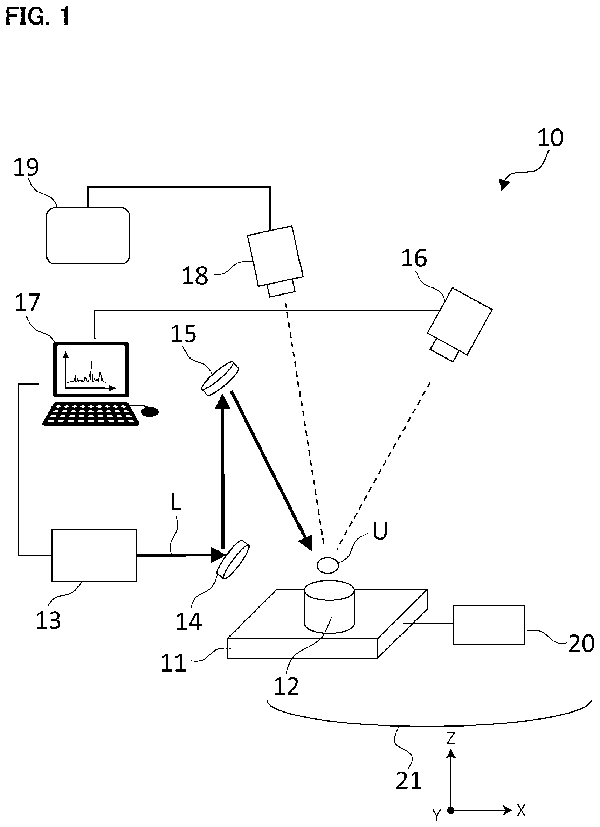

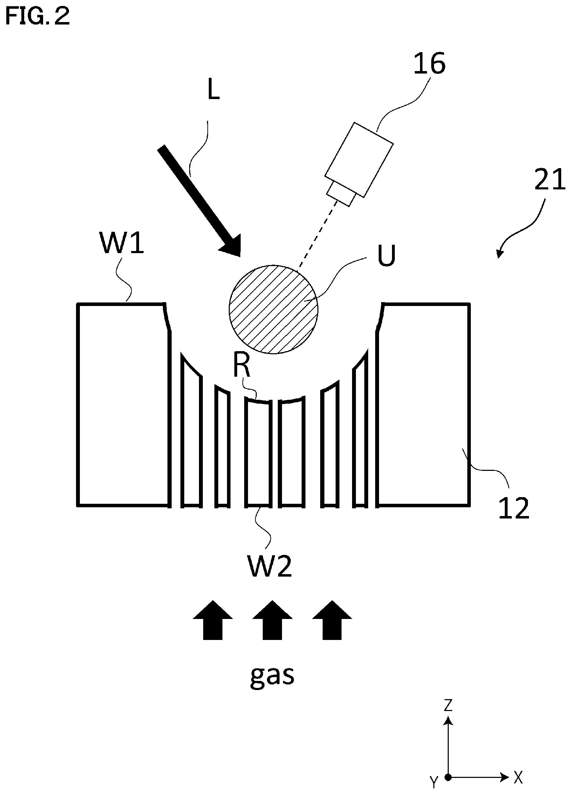

FIG. 1 illustrates a schematic diagram of a glass manufacturing apparatus 10 equipped with a floating furnace that includes a floating unit (support unit) 21 according to this embodiment. FIG. 2 illustrates a schematic cross-sectional diagram showing a state in which the sample U floats on the floating unit 21 and is heated in FIG. 1. Floating the sample U by the floating unit 21 is also referred to as non-contact support of the sample U.

As illustrated in FIG. 1, the glass manufacturing apparatus 10 is an optical glass manufacturing apparatus equipped with a gas jet floating furnace. The glass manufacturing apparatus 10 manufactures glass by floating glass raw material with gas and heating/melting the floating glass raw material. The glass manufacturing apparatus 10 comprises a floating furnace that includes a support member 12, which sprays gas onto the sample U containing the glass raw material to float it; a laser light source 13, which irradiates the floating sample U with laser light L; a radiation thermometer 16, which measures the temperature of the floating sample U; a computer 17, which has a control unit (not illustrated) that controls the output of the laser light source 13 and the support member 12 as well as a later-described forming unit 30 based on the temperature information from the radiation thermometer 16; and a gas flow rate regulator 20, which adjusts the flow rate of gas supplied to the support member 12. The support member 12 and the gas flow rate regulator 20 are included in the floating unit 21, which floats the sample U.

In the glass manufacturing apparatus 10, the sample U floating above the support member 12 placed on the stage 11 is non-contact heated by laser light L irradiation. In other words, the laser light source 13, which irradiates the laser light L, functions as a heating unit. As a result, the sample U melts, forming a nearly spherical or nearly ellipsoidal molten state due to its surface tension and remains floating in this state.

The non-contact heating of the sample U is performed by irradiating the sample U with laser light L emitted from the laser light source 13 via mirrors 14 and 15. The temperature of the sample U heated by the laser light L irradiation is monitored by the radiation thermometer 16. Based on the temperature information of the sample U monitored by the radiation thermometer 16, the output of the laser light source 13 is controlled by the computer 17. Furthermore, the state of the sample U is captured by a CCD camera 18 and displayed on a monitor 19. The laser light source 13 is not particularly limited and may include, for example, a carbon dioxide laser, a semiconductor laser, a fiber laser, or a YAG laser.

The flow rate of gas supplied to the support member 12 is controlled by the gas flow rate regulator 20. The type of gas is not particularly limited, and any known gas can be appropriately selected. Examples of such gases include oxygen, carbon dioxide, nitrogen, argon, and air. Additionally, the shape of the nozzle (not illustrated) connected to the support member 12 is not particularly limited and can be appropriately selected based on known methods.

After the stably floating sample U is non-contact heated, the laser light L is cut off. As a result, the molten sample U cools and solidifies, and the optical glass is obtained.

In this embodiment, external pressure is applied to the molten sample U to shape it into the desired thickness and size. The sample U is then cooled and solidified. The optical glass thus obtained can be further processed, polished, and shaped into a desired optical element as needed.

As illustrated in FIG. 2, the support member 12 includes a first surface W1, which has a concave surface R facing the sample U, and a second surface W2, which is opposite the first surface W1 and serves as a gas introduction surface. The second surface W2 has an inlet for introducing gas, while the concave surface R of the first surface W1 has an outlet for ejecting gas. The gas introduced through the inlet is ejected from the outlet, causing the sample U to float.

The support member 12 only needs to be capable of floating the sample U, and its shape and structure are not limited to the example shown in FIG. 2. For instance, the support member 12 may be formed of a porous material that allows gas introduced from the second surface W2 to be ejected from the first surface W1, thereby floating the sample U. The shape of the support member 12 is not limited to the illustrated example and may be modified as appropriate.

Additionally, the support member 12 may float the sample U using electrostatics. In this case, the glass manufacturing apparatus 10 does not include a gas flow rate regulator 20 but instead has an electrostatic device (not illustrated) that charges the sample U. The support member 12 may float the sample U electrostatically by placing it between one or multiple pairs of electrodes constituting the electrostatic device. The floating method employed by the support member 12 is not limited to the aforementioned examples and may also include electromagnetic, acoustic, or magnetic methods.

### <First Embodiment>

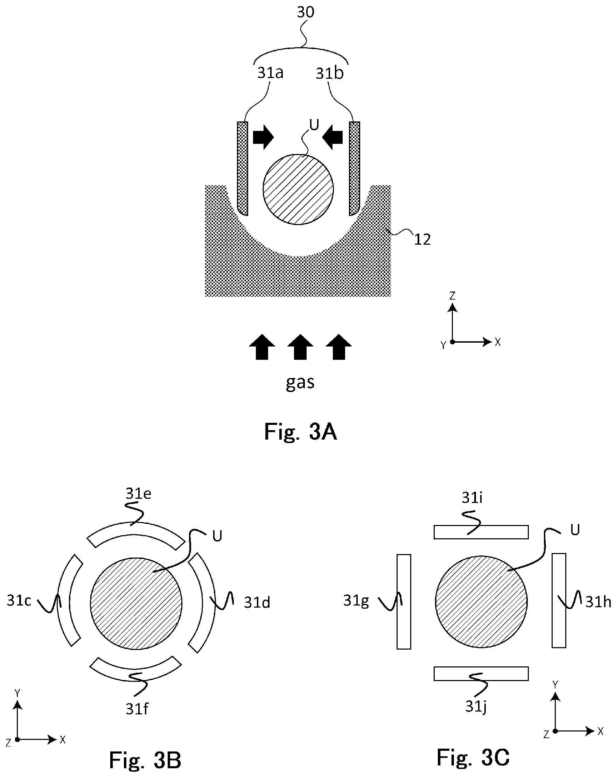

FIG. 3 illustrates a schematic cross-sectional diagram showing an example of the vicinity of the floating furnace in the first embodiment. FIG. 3A illustrates a schematic cross-sectional diagram showing an example of the vicinity of the floating furnace in the first embodiment. FIG. 3B illustrates a view of the forming member 31 as seen from the support member 12 side (first view), and FIG. 3C illustrates a view of the forming member 31 as seen from the support member 12 side (second view).

In a conventional glass manufacturing apparatus 10, when manufacturing optical glass using a floating furnace, the sample U is melted by laser irradiation and then solidified by cooling to obtain optical glass. In this process, the thickness of the sample U is limited due to the relationship between surface tension and gravity acting on the sample U.

The glass manufacturing apparatus 10 in this embodiment enables the production of optical glass with the desired thickness by shaping the molten sample U during the cooling process.

The glass manufacturing apparatus 10 in the first embodiment includes a floating unit 21 that comprises a support member 12 and a gas flow rate regulator 20, a stage 11, a laser light source 13, mirrors 14 and 15, a radiation thermometer 16, a computer 17 with a control unit 22, a CCD camera 18, a monitor 19, and a forming unit 30 that shapes the molten glass raw material while floating in the floating unit 21.

The forming unit 30 comprises forming members 31 (31a, 31b) and shapes the molten glass by pressing the forming members 31 against it, as shown in FIG. 3A. The forming members 31 alter the shape of the molten sample U. For example, forming members 31 are multiple, and multiple claw-like members driven by a motor in a direction parallel to the horizontal plane (e.g., +X direction, -X direction). Each forming member 31 is arranged to surround the sample U and can be driven to open and close, allowing the sample U to be clamped from multiple directions. That is, the forming unit 30 presses multiple forming members 31 against the molten sample U from multiple directions toward the center to shape it.

The material of the forming members 31 is not particularly limited, but it is preferable that at least part or all of the forming members 31 comprise stainless steel (SUS), aluminum alloy, quartz, or carbon. These materials have excellent heat shock resistance and wear resistance even at high temperatures, and their wettability with glass is appropriately suppressed, preventing the formation of crystalline points in the molten glass. Furthermore, the melting point of the material of the forming members 31 in contact with the molten glass should be high enough to prevent deformation at high temperatures, preferably 500°C or higher.

As an example, the forming members 31, as shown in FIG. 3B, consist of two pairs of opposing claw-like members. FIG. 3B illustrates a view from below (support member 12 side) of the forming members 31 and the sample U. The forming members 31 (31c to 31f) are arranged to surround the sample U. In this embodiment, the surfaces of the forming members 31 that contact the sample U are arc-shaped. The pair of claw-like forming members 31c and 31d constituting each pair of the forming members 31 move in the +X and -X directions, respectively, while the other pair of claw-like forming members 31e and 31f move in the +Y and -Y directions, respectively. In other words, the forming members 31 can shape the sample U by clamping it from four directions (+X, -X, +Y, -Y) through opening and closing motions.

By using the forming members 31 shown in FIG. 3B, the shape of the sample U can be altered while increasing its length in the Z-axis direction. The arrangement and number of forming members 31 are not limited to this example and can be four or more. In such a case, the forming unit 30 presses the forming members 31 against the molten glass from more than four directions to shape it. The shape of the forming members 31 that contact the sample U is designed appropriately.

A specific example is shown next. FIG. 3C illustrates a view from below (support member 12 side) of the forming members 31 and the sample U. The surface of the forming members 31 that contact the sample U may be flat. By using forming members as shown in FIG. 3C, the shape of the sample U can be altered while increasing its length in the Z-axis direction. Additionally, the number of forming members 31 and the shape of the surface contacting the sample U can be changed to form the shape of the sample U as needed. The forming members 31 reduce the effort required to process the solidified glass sample U. Furthermore, to prevent damage to the sample U due to temperature differences between the forming members 31 and the sample U, the forming members 31 may be preheated before shaping.

After the laser irradiation from the laser light source 13 stops, the forming unit 30 lowers multiple forming members 31 in an open state. At this time, it is preferable that the forming unit 30 positions the sample U near the center of the opened forming members 31. Then, the forming unit 30 drives multiple forming members 31 in a closing direction (e.g., +X direction, -X direction) so as to sandwich the sample U, bringing the forming members 31 into contact with the sample U. The forming unit 30 further applies pressure in the closing direction of the forming members 31, thereby increasing the thickness of the sample U. Thereafter, by removing the sample U from the forming members 31, an optical glass with a desired thickness can be obtained.

Additionally, the sample U is shaped by the forming members 31 until its temperature drops to a level where it no longer deforms. When the temperature of the sample U drops below the temperature at which it no longer deforms, the sample U may be removed from the forming members 31 and cooled. The temperature at which the sample U ceases to deform is preferably at or below the glass transition temperature of the sample U.

It is preferable that the shaping of the sample U by the forming unit 30 is performed at a temperature at or below the yield point (Sag temperature) and, more preferably, at or below the yield point and at or above the glass transition point. If shaping with the forming members 31 is performed at a temperature exceeding the yield point, contact between the forming members 31 and the sample U may cause excessive wettability, leading to the formation of crystallization points and potential devitrification.

The sample U, at or above the glass transition point and at or below the yield point, has a viscosity suitable for pressure forming and exhibits reduced excessive wettability toward the forming members 31, making it possible to efficiently obtain optical glass with the desired thickness and size.

For setting the timing of the sample U forming by the forming unit 30, it is preferable to use the control unit 22. The control unit 22 acquires information on the physical properties, which are predetermined characteristics of the sample U, before forming the sample U, specifically the glass transition temperature and the yield point. Thus, the control unit 22 controls the forming unit 30 to ensure that the sample U is formed at the optimal temperature described above. The physical properties are not limited to these but also include other values necessary for forming the molten glass by the forming unit 30.

The control unit 22 monitors the temperature of the molten glass after laser irradiation stops using the radiation thermometer 16. The control unit 22 controls the forming unit 30 to form the sample U when its temperature is at or above the glass transition point and at or below the yield point.

Furthermore, the control unit 22 may include a calculation unit 23 that calculates the timing for controlling the forming unit 30. The calculation unit 23 determines the forming timing of the sample U by the forming unit 30 based on information about the yield point, the glass transition temperature, and the weight of the raw material of the sample U. The reason for using the weight information of the raw material of the sample U is that the cooling rate after stopping laser irradiation varies depending on the weight of the sample U. By incorporating the weight information, a more optimal timing can be calculated. The information used by the calculation unit 23 is not limited to the weight of the raw material of the sample U but may also include the size of the sample U (such as volume or surface area).

In this embodiment, the sample U is continuously processed from melting to forming, but a once-solidified glass sample U may also be used as a forming target. In such a case, the sample U floating on the support member 12 is reheated to a temperature at or above the liquid phase temperature of the glass. After that, laser irradiation is stopped again, and the sample U is formed by the forming unit 30 at or below the yield point and at or above the glass transition point.

### <Second Embodiment>

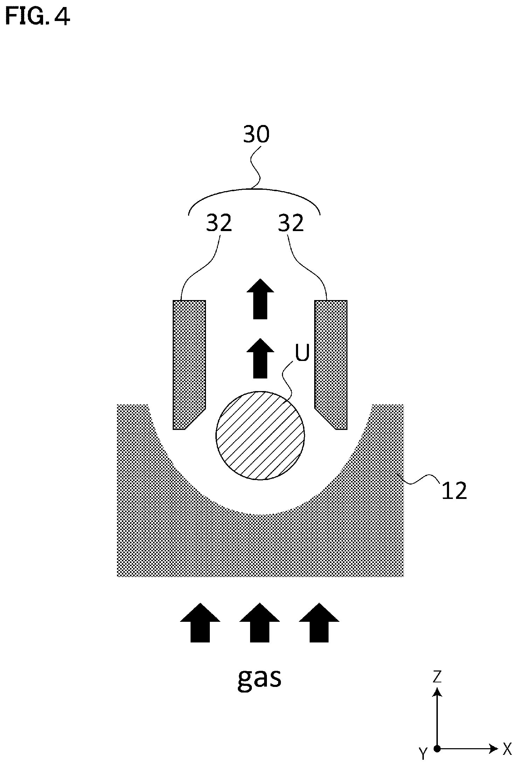

FIG. 4 illustrates a schematic cross-sectional diagram showing an example of the vicinity of the floating furnace in the second embodiment. The differences from the first embodiment are described below. In the second embodiment, the forming unit 30 includes a suction unit 32 instead of the forming members 31. The suction unit 32 is a hollow tubular member connected to an unillustrated suction device and suctions the sample U by reducing the internal pressure. That is, in the second embodiment, the glass manufacturing apparatus 10 forms the molten glass by suction.

The suction unit 32 has a tapered cross-sectional shape where the inner side gradually narrows as it extends inward. This tapered shape gathers the suctioned glass toward the center, increasing its thickness. Like the forming members 31 in the first embodiment, it is preferable that at least part or all of the suction unit 32 comprises stainless steel (SUS), aluminum alloy, quartz, or carbon.

After the laser irradiation from the laser light source 13 stops, the forming unit 30 forms the sample U using the suction unit 32 positioned in a location where it can suction the sample U. It is preferable that the suction unit 32 is placed directly above the sample U, aligning its center with the center of the sample U. The forming unit 30 reduces the pressure inside the suction unit 32 to suction the sample U. During suction, the outer edge of the sample U contacts the lower end or inner wall of the suction unit 32, while the center portion of the sample U is drawn upward, increasing its thickness along the Z-axis direction. After that, the sample U is removed from the forming unit 30 and cooled to obtain optical glass with the desired thickness.

### <Modified Example of the Second Embodiment>

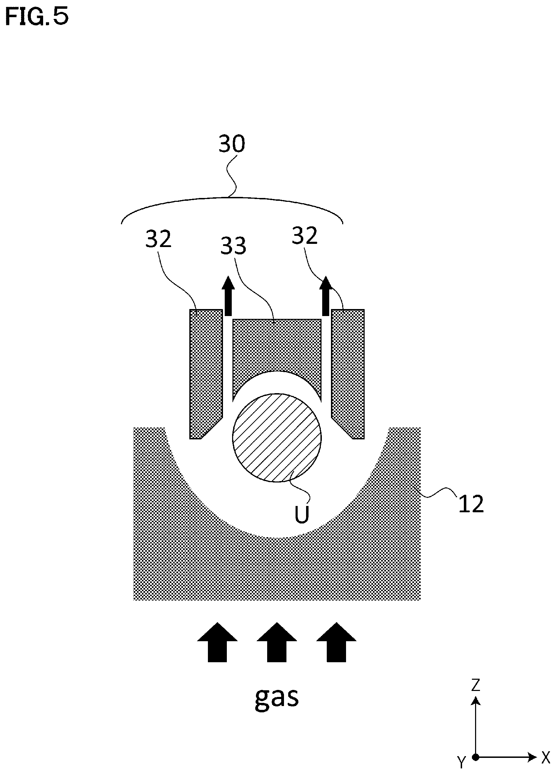

FIG. 5 illustrates a schematic cross-sectional diagram showing an example of the vicinity of the floating furnace in a modified example of the second embodiment. The differences from the second embodiment are described below. In this modified example, the forming unit 30 includes not only the suction unit 32 but also a forming member 33. The forming member 33 forms the molten glass sample U.

The forming member 33 functions as a mold to form the sample U. It is positioned in the direction of suction by the suction unit 32 and contacts the suctioned sample U to adjust its shape. As an example, in the forming unit 30, the suction unit 32 is arranged to surround the forming member 33 in a plane perpendicular to the direction of gravity.

After the laser irradiation from the laser light source 13 stops, the forming unit 30 shapes the sample U using the suction unit 32 positioned in a location where it can suction the sample U. It is preferable that the suction unit 32 is positioned directly above the sample U, aligning its center with the center of the sample U. As a result, the forming member 33 is placed directly above the sample U.

The forming unit 30 reduces the pressure inside the suction unit 32 to suction the sample U. The upper part of the suctioned sample U contacts the forming member 33. As a result, the sample U is pressed against the forming member 33, and the upper part of the sample U conforms to the shape of the forming member 33. If the support member 12 continues to supply gas at this time, the sample U will be formed while being pressed from above by the forming member 33 and from below by the gas. That is, the sample U is formed while being sandwiched between the gas from the support member 12 and the forming member 33. Afterward, the sample U is cooled to obtain optical glass with the desired thickness and form.

Additionally, during suction by the suction unit 32, the forming unit 30 may press the sample U against the forming member 33 by moving the forming member 33 downward to adjust its shape. Even in this case, if the support member 12 continues to supply gas, the sample U will be formed while being sandwiched between the gas from the support member 12 and the forming member 33. This allows not only forming the upper part of the sample U into the desired form but also increasing the diameter of the sample U to achieve the desired size.

Furthermore, the forming unit 30 may form the molten glass by pressing the forming member 33 against the sample U from above while contacting the lower part of the sample U with the concave surface R of the support member 12. In this case, the molten glass is formed while being sandwiched between the support member 12 and the forming member 33. The shape of the surfaces of the suction unit 32 and the forming member 33 that contact the sample U can be designed as needed.

### <Third Embodiment>

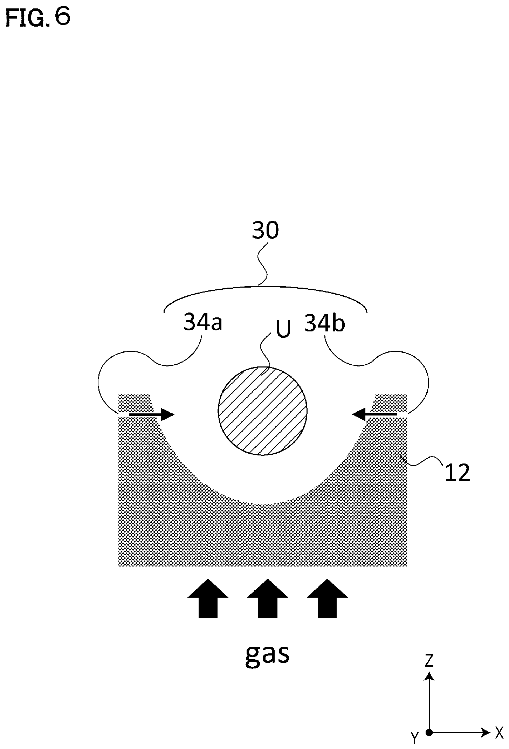

FIG. 6 illustrates a schematic cross-sectional diagram showing an example of the vicinity of the floating furnace in the third embodiment. The differences from the first embodiment are described below. In this embodiment, the forming unit 30 shapes the sample U by blowing gas onto it.

As in other embodiments, in this embodiment, the sample U is kept floating by gas ejected upward from an injection port (not illustrated) provided in the floating unit 21. The forming unit 30 includes multiple nozzles 34 (34a, 34b) that blow gas onto the sample U from lateral directions (+X direction, -X direction). Each nozzle 34 blows gas toward the center of the sample U from different directions. This presses the sample U from the sides toward the center, increasing its thickness. The number of nozzles 34 is preferably four or more rather than just two. The nozzles 34 are preferably arranged around the sample U to achieve uniform shaping. Additionally, the spacing between the nozzles 34 is preferably approximately equal.

In the example shown in FIG. 6, the forming unit 30 consists of multiple holes in the support member 12, with each hole functioning as a nozzle 34. Alternatively, the forming unit 30 may be a separate mechanism from the support member 12, placed above it. When the laser irradiation from the laser light source 13 stops, the sample U remains floating due to the upward gas ejection from the support member 12. The forming unit 30 then ejects gas from the sides toward the sample U, pressing it from the periphery toward the center. Afterward, the sample U is cooled to obtain optical glass with the desired thickness.

### <Fourth Embodiment>

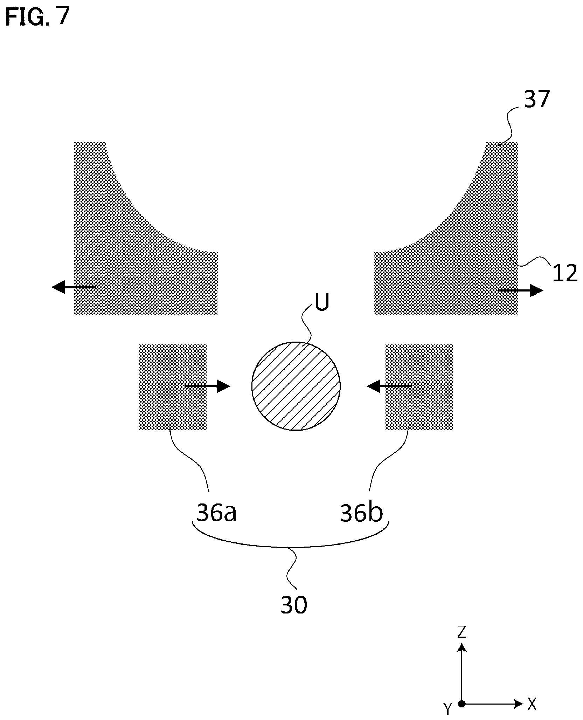

FIG. 7 illustrates a schematic cross-sectional diagram showing an example of the vicinity of the floating furnace in the fourth embodiment. The differences from the first embodiment are described below. The floating unit 21 in this embodiment includes a support member for floating the molten glass and a division unit 37 that divides the support member. Additionally, the forming unit 30 in this embodiment includes multiple forming members 36 (36a, 36b).

The support member 12 can be divided into multiple sections in a plane orthogonal to gravity. The division unit 37 divides the support member 12 into multiple components. For example, the division unit 37 divides the support member 12 by pulling each component outward.

The forming members 36 (36a, 36b) are molds that form the heated sample U by applying pressure. It is preferable that at least part or all of the forming members 36 include stainless steel (SUS), aluminum alloy, quartz, or carbon. The forming members 36 consist of multiple components arranged around the sample U, pressing the sample U from different horizontal directions toward the center.

The multiple forming members 36 are positioned below the support member 12 and are initially spaced apart before the support member 12 is divided. After the laser irradiation from the laser light source 13 stops, the division unit 37 divides the support member 12, which was floating the sample U, in a plane orthogonal to gravity. When the support member 12 is divided, it releases its hold on the sample U, causing the sample U to fall.

The forming members 36 move toward the center of the sample U, catching the falling sample U and holding it from the sides. Subsequently, as the forming members 36 continue to move toward the center of the sample U, its thickness increases. In other words, the forming unit 30 forms the sample U by pressing the forming members 36 against the falling sample U from at least two directions (+X and -X directions). Afterward, the sample U is removed from the forming members 36 and cooled to obtain optical glass with the desired thickness.

In this embodiment, the forming members 36 may also be a container with raised walls. In such a case, the forming members 36 apply pressure from the periphery of the sample U by moving the walls inward toward the center, increasing the thickness of the sample U. In other words, the forming unit 30 can form the sample U by placing the falling sample U into the forming members 36 after the support member is divided. The shape of the surfaces of the forming members 36 that contact the sample U can be designed as needed.

### <Fifth Embodiment>

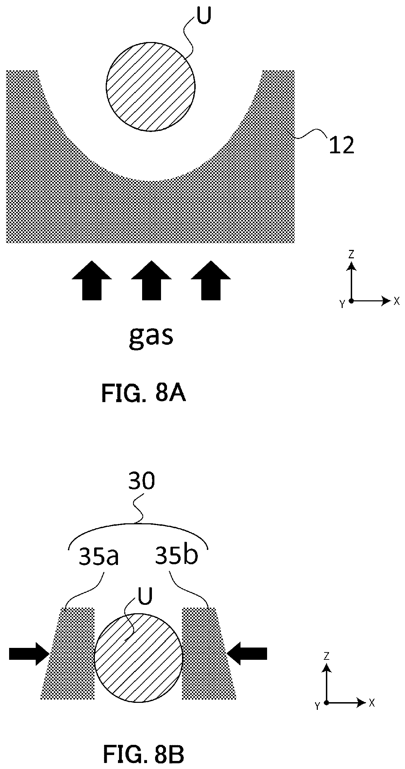

FIG. 8 illustrates a schematic cross-sectional diagram showing an example of the vicinity of the floating furnace in the fifth embodiment. FIG. 8A illustrates the first schematic cross-sectional diagram of the vicinity of the floating furnace in the fifth embodiment, and FIG. 8B illustrates the second schematic cross-sectional diagram. The differences from the first embodiment are described below. The forming unit 30 in this embodiment includes one or more forming members 35 (35a, 35b). The forming unit 30 forms a reheated sample U, which was first cooled to room temperature after heating, using the forming members 35.

As illustrated in FIG. 8A, in the glass manufacturing apparatus 10, the sample U is floated above the support member 12. During this process, the sample U is heated by laser light L emitted from a laser light source 13 (not illustrated). Afterward, the sample U is cooled to room temperature, forming optical glass.

Next, the forming unit 30 reheats the sample U. The reheating process may be performed by allowing the support member 12 to hold the sample U while laser light L is emitted or by using another heating device. The reheated sample U is then positioned for forming by the forming members 35. The sample U positioned in the forming members 35 is formed at or above the glass transition point and at or below the yield point. In other words, the reheating process ensures that the sample U is at or above the glass transition point and at or below the yield point when forming takes place.

The forming members 35 are molds capable of forming the heated sample U by applying pressure. Like the forming members 33 in the previous embodiments, it is preferable that at least part or all of the forming members 35 include stainless steel (SUS), aluminum alloy, quartz, or carbon.

As illustrated in FIG. 8B, the forming members 35 are multiple components arranged around the sample U, pressing the sample U from different horizontal directions toward the center. After pressure is applied, the sample U is cooled again to obtain optical glass with the desired thickness. The structure of the forming members is not limited to this example. For instance, similar to the forming members 31 in the first embodiment, the forming members 35 may consist of multiple claw-shaped components. Alternatively, they may be a container with raised walls, where inserting the viscous sample U results in shaping.

This embodiment improves efficiency by enabling the shaping of a sample U after its floating process has ended. Additionally, reheating the sample U to a temperature, at or above the glass transition point and at or below the yield point, allows the production of optical glass with the desired thickness while suppressing devitrification. The shape of the surfaces of the forming members 35 that contact the sample U can be designed as needed.

### <Sixth Embodiment>

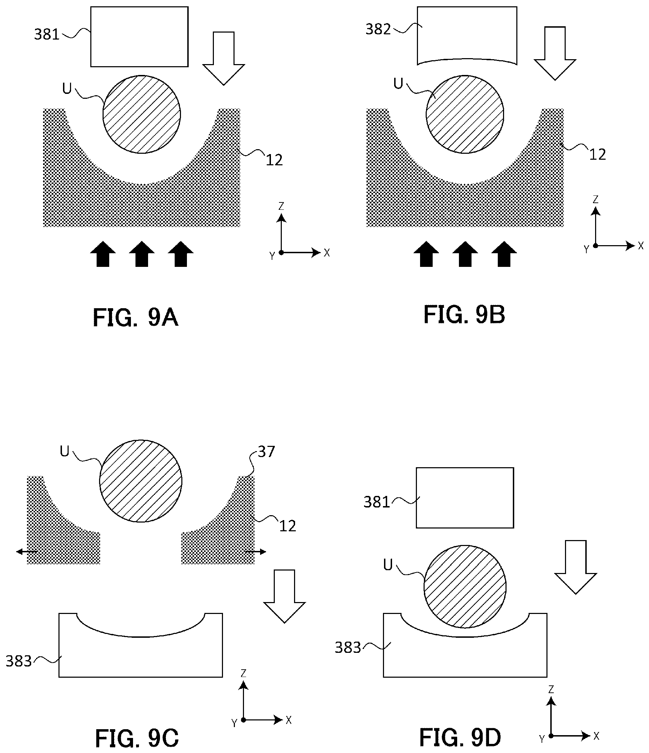

In the first to fifth embodiments described above, the objective was to increase the thickness of the sample U in the vertical (Z) direction. However, it is also possible to increase the diameter of the sample U in the horizontal (X) direction. FIG. 9 illustrates a schematic cross-sectional diagram showing an example of the vicinity of the floating furnace in the sixth embodiment. FIG. 9A illustrates the first schematic cross-sectional diagram of the vicinity of the floating furnace in the sixth embodiment. FIG. 9B illustrates a variation of the forming member 381, and FIG. 9C illustrates the second schematic cross-sectional diagram. FIG. 9D illustrates a variation of the forming method using the forming member 383.

In the example illustrated in FIG. 9A, the forming member 381 contacts the floating sample U from the gravity direction (-Z direction) via the support member 12, sandwiching the sample U between the support member 12 and the forming member 381. In other words, the sample U is formed by applying pressure from above using the forming member 381. This process increases the diameter of the sample U in the horizontal direction. The forming of the sample U by the forming member 381 is preferably performed at a temperature at or below the yield point and more preferably at or below the yield point and at or above the glass transition point. During forming, the sample U may either remain floating or stop floating. The shape of the tip of the forming member 381 in contact with the sample U can be designed as desired. For example, it may have a lens shape like the forming member 382 illustrated in FIG. 9B or an aspherical lens shape (not illustrated).

The example illustrated in FIG. 9C is explained. Since the support member 12 is the same as in the fourth embodiment, its explanation is omitted. Initially, the sample U is floating above the support member 12. When the division unit 37 divides the support member 12, the sample U falls due to gravity. The falling sample U is caught by the forming member 383 and formed along its surface. In other words, the sample U may be formed by conforming to the shape of the forming member 383 due to its own weight. Additionally, as illustrated in FIG. 9D, pressure may be applied from above using the forming member 381 to further form the sample U on the forming member 383.

The forming of the sample U by the forming members 381-383 is preferably performed at a temperature at or below the yield point and more preferably, the forming is conducted at a temperature that is at or below the yield point and at or above the glass transition point.

### <Seventh Embodiment>

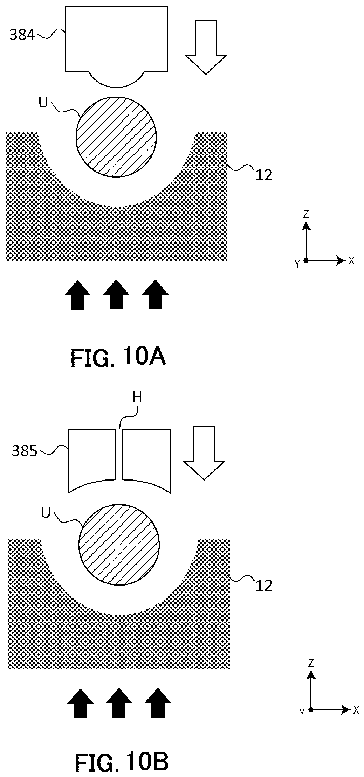

The glass manufacturing apparatus 10 in the seventh embodiment, like the sixth embodiment, can increase the diameter of the sample U in the horizontal (X) direction. FIG. 10 illustrates a schematic cross-sectional diagram showing an example of the vicinity of the floating furnace in the seventh embodiment. FIG. 10A illustrates a schematic cross-sectional diagram showing an example of a forming member in the seventh embodiment, while FIG. 10B illustrates a variation of the forming member.

In the example shown in FIG. 10A, the forming unit 30 includes a forming member 384. Similar to the forming members 381 and 382 shown in FIG. 9, the forming unit 30 brings the forming member 384 into contact with the molten sample U floating by the support member 12 from the gravity direction (-Z direction), sandwiching the sample U between the support member 12 and the forming member 384. That is, the sample U in its molten state is pressed from above by the forming member 384 to be formed. Before the forming member 384 contacts the sample U, the floating of the sample U may be stopped. In other words, the forming member 384 may be brought into contact with a sample U that is directly placed and supported on the support member 12.

The forming member 384 shown in FIG. 10A has a convex shape at the center of the tip facing the sample U. As a result of forming with the forming member 384, the upper part of the sample U takes on a concave shape that replicates the forming member 384, while the bottom part replicates the shape of the support member 12. The support member 12 can be designed with an appropriate desired shape.

The forming member 385 shown in FIG. 10B has a hole H. The hole H is a through-hole that extends from the tip side facing the sample U to the opposite surface of the forming member 385. If an air pocket exists at the interface between the forming member 385 and the sample U, unintended effects on the shape of the sample U may occur. The hole H prevents air pockets from forming at the interface between the forming member 385 and the sample U.

The laser light L emitted from the laser light source 13 may pass through the hole H and be irradiated onto the sample U. The forming member 385 may start forming the sample U after the heating by laser irradiation is completed, or it may begin forming during the heating process.

### <Eighth Embodiment>

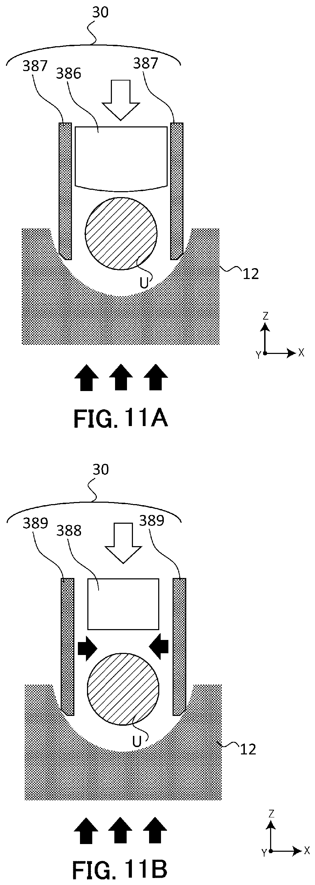

In the first to seventh embodiments described above, one of the objectives was to increase the thickness of the sample U in the vertical (Z) direction or to increase its diameter in the horizontal (X or Y) direction. The eighth embodiment enables the shaping of the sample U into a desired form. FIG. 11 illustrates a schematic cross-sectional diagram showing an example of the vicinity of the floating furnace in the eighth embodiment. FIG. 11A illustrates an example of a forming unit in the eighth embodiment, while FIG. 11B illustrates a variation of the forming unit.

As shown in FIG. 11A, the forming unit 30 includes a forming member 386 and an auxiliary member 387. Similar to the forming members 381 and 382 shown in FIG. 9 and the forming members 384 and 385 shown in FIG. 10, the forming unit 30 moves the forming member 386 downward in the gravity direction (-Z direction) to apply pressure from above onto the sample U. The auxiliary member 387 is arranged to surround the sample U horizontally. The auxiliary member 387 is a hollow cylindrical component that encloses the entire perimeter of the sample U. The auxiliary member 387 may also consist of multiple claw-like components, as shown for the forming members 31 in FIG. 3. The tip of the forming member 386 facing the sample U can be designed into any desired shape.

When the forming member 386 moves downward and applies pressure to the molten sample U from above, the diameter of the sample U increases and comes into contact with the auxiliary member 387. As a result, the diameter of the sample U is constrained by the shape of the auxiliary member 387. In other words, the auxiliary member 387 functions as a guide that determines the horizontal size and shape of the sample U. Therefore, using both the forming member 386 and the auxiliary member 387, the sample U can be formed into a desired form.

As shown in FIG. 11B, the forming unit 30 includes a first forming member 388 and a second forming member 389. Similar to the forming member 386 in FIG. 11A, the first forming member 388 moves downward in the gravity direction (-Z direction) to apply pressure onto the sample U from above. The second forming member 389, like the forming members 31 shown in FIG. 3, consists of multiple claw-like components that move in a horizontal direction parallel to the plane. These components are arranged to surround the sample U and can clamp it from multiple directions. That is, the forming unit 30 shapes the sample U by pressing the first forming member 388 from above onto the molten sample U while simultaneously pressing the second forming member 389 against the sample U in a predetermined plane that intersects the gravity direction. Thus, by using the forming unit 30 in this embodiment, the sample U can be formed into a desired form.

### <Ninth Embodiment>

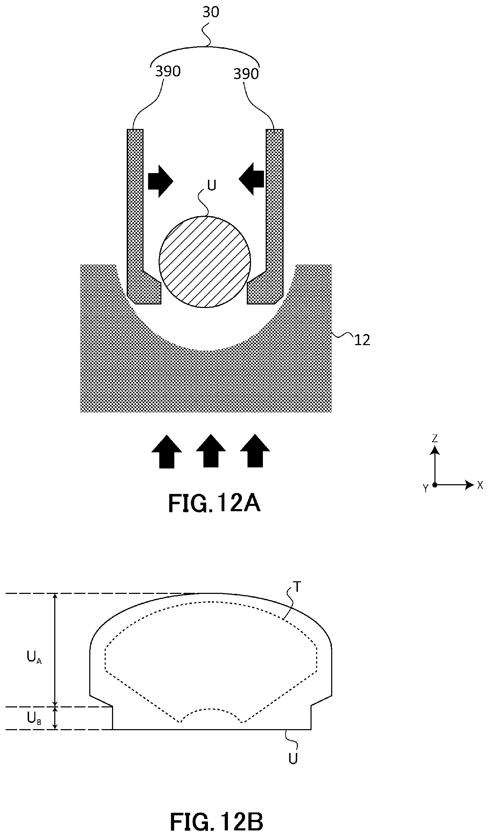

The glass manufacturing apparatus 10 in the ninth embodiment shapes the sample U into a desired form by using a forming member 390 with a predefined shape. FIG. 12 illustrates diagrams explaining the floating furnace in the ninth embodiment. FIG. 12A illustrates a schematic cross-sectional diagram showing an example of the forming unit in the ninth embodiment, while FIG. 12B illustrates a schematic cross-sectional diagram explaining shaping using the forming unit.

The forming unit 30 includes multiple forming members 390. In the cross-sectional view along the gravity direction, each forming member 390 has an L-shaped lower section that protrudes toward the center of the sample U. Like the forming members 31 shown in FIG. 3, each forming member 390 consists of multiple claw-like components that move in a horizontal direction parallel to the plane, are arranged to surround the sample U, and can clamp it from multiple directions.

FIG. 12B illustrates the sample U shaped by the forming members 390 and the lens T formed from the sample U in a cross-sectional view along the gravity direction. By applying pressure to the sample U using the forming members 390, not only does the thickness of the sample U increase, but also the diameter of the lower part U_{B} becomes smaller than the diameter of the upper part U_{A}. As shown in the figure, if a lens T in a cross-sectional view along the gravity direction similar to a fan shape, where the lower part U_{B} has a smaller diameter than the upper part U_{A}, is desired, using the forming members 390 in this embodiment allows the sample U to be formed into a shape closer to the final lens T.

In this embodiment, since the sample U is floated and heated, it is desirable to utilize the volume of the sample U more effectively. By using the forming members 390 in this embodiment, the sample U can be shaped closer to the final lens T shape. Thus, even when the volume of the sample U that can be melted by floating is limited, the lens T can be obtained with a more efficient use of the sample U's volume.

### <Tenth Embodiment>

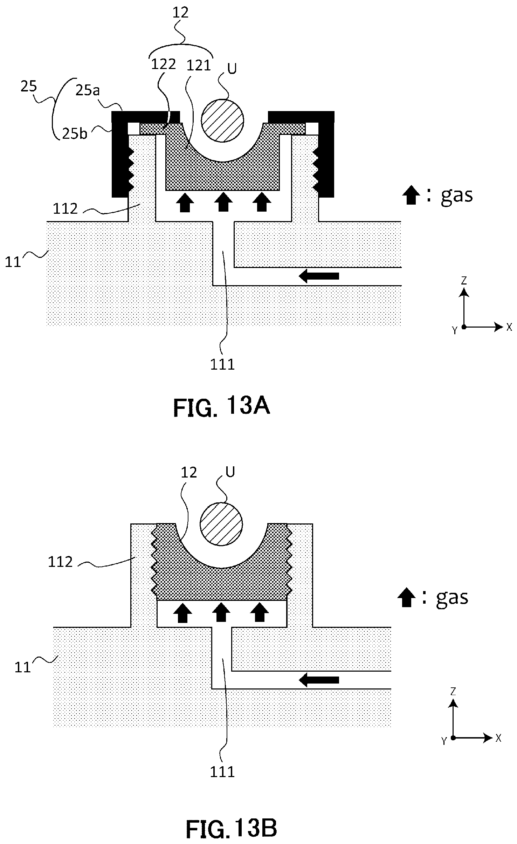

The glass manufacturing apparatus 10 in the tenth embodiment allows the support member 12 to be replaceable relative to the stage 11. FIG. 13 illustrates a schematic cross-sectional diagram showing an example of the vicinity of the floating furnace in the tenth embodiment. FIG. 13A illustrates a schematic cross-sectional diagram showing an example of the vicinity of the floating furnace in the tenth embodiment, while FIG. 13B illustrates a variation of the floating furnace in the tenth embodiment.

In this embodiment, the glass manufacturing apparatus 10 includes a fixing member 25. The material of the fixing member 25 can be selected as needed, but it is preferable that at least part or all of the fixing member 25 be made of stainless steel (SUS) or an aluminum alloy.

The material of the support member 12 can also be selected as needed, but it is preferable that it be made of stainless steel (SUS), an aluminum alloy, silicon carbide (SiC), brass, or similar materials. The support member 12 includes a base portion 121, which has a first surface W1 and a second surface W2 as shown in FIG. 2, and a locking portion 122 that secures it to the stage 11. The stage 11 is preferably made of stainless steel (SUS) or an aluminum alloy and includes a nozzle 111 that connects to the gas flow rate regulator 20 to supply gas to the support member 12, as well as a fixing wall 112 that extends substantially vertically upwards. The gas flow rate regulator 20 and the nozzle 111 function as a gas supply unit that supplies gas to float the sample U. The fixing wall 112, which has a circular horizontal cross-section, functions to isolate the space filled with gas, preventing the gas emitted from the nozzle 111 from leaking outward.

The locking portion 122 engages with the upper part of the fixing wall 112. In other words, the stage 11 supports the support member 12 from below. The support member 12 is detachable from the stage 11. The base portion 121 is positioned inside the fixing wall 112. As shown in FIG. 13A, there may be a gap between the base portion 121 and the fixing wall 112. For example, if there is a gas inlet hole on the side of the base portion 121, the existence of the gap allows gas to be emitted from the hole toward the first surface W1. However, the base portion 121 and the fixing wall 112 do not necessarily have to have a gap.

The fixing member 25 is positioned above the support member 12 and secures the support member 12 to the stage 11. For example, as shown in FIG. 13A, the fixing member 25 includes a horizontal surface 25a that covers part of the support member 12 and a vertical side surface 25b that extends downward from the edge of the horizontal surface 25a. The horizontal surface 25a has an opening near the center to expose the concave surface R of the support member 12.

For example, the support member 12 may be secured to the stage 11 using a screw mechanism. Specifically, the inner side of the side surface 25b of the fixing member 25 is threaded to engage with part of the fixing wall 112. By rotating the fixing member 25 relative to the stage 11, the fixing member 25 is secured to the stage 11. This results in part of the support member 12 being clamped between the fixing member 25 and the fixing wall 112, thereby securing the support member 12 to the stage 11.

The method of securing the fixing member 25 to the stage 11 is not limited to this example. For instance, the side surface 25b may have through-holes, and screws may be inserted through these holes into threaded holes on the fixing wall 112 from the outside to the inside, thereby securing the fixing member 25 to the stage 11.

As shown in FIG. 13B, the glass manufacturing apparatus 10 may also be configured such that the support member 12 is secured to the stage 11 without using the fixing member 25. In this case, for example, the inner side of the fixing wall 112 is threaded to engage with part of the side surface of the support member 12. By rotating the support member 12 relative to the fixing wall 112, the support member 12 can be secured to the stage 11.

As described above, when forming is performed by pressing the forming unit 30 onto the sample U from above, the bottom surface of the sample U takes on the shape of the concave surface R of the support member 12. The concave surface R of the support member 12 can be designed in various shapes, such as a lens shape, an aspherical lens shape, a flat central surface, or a concave or convex central surface.

Additionally, the diameter of the concave surface R can be designed according to the desired size of the glass.

According to the glass manufacturing apparatus 10 of the present embodiment, multiple support members 12 can be prepared, and after removing the first support member 12, a second support member 12 can be fixed to the stage 11. This allows for easy replacement with the desired support member 12.

In the case of replacing the support member 12 in the glass manufacturing apparatus shown in FIG. 13A, first, the fixing member 25 is removed from the stage 11. Next, after removing the first support member 12 from the stage 11, the second support member 12 is supported on the stage 11, and then the fixing member 25 is reattached.

The support member 12 may be made of an aluminum alloy from the perspective of ease of machining the concave surface R and minimizing the dissolution of impurities into the sample U. When using an aluminum alloy for the support member 12, a material with lower thermal conductivity than aluminum, such as stainless steel (SUS), can be used for the stage 11 to suppress temperature gradients in the entire floating furnace. Since the support member 12 may deteriorate at a faster rate than the stage 11, the glass manufacturing apparatus 10 in this embodiment allows easy replacement of the support member 12, which is more susceptible to wear compared to the stage 11.

### <Heating Control>

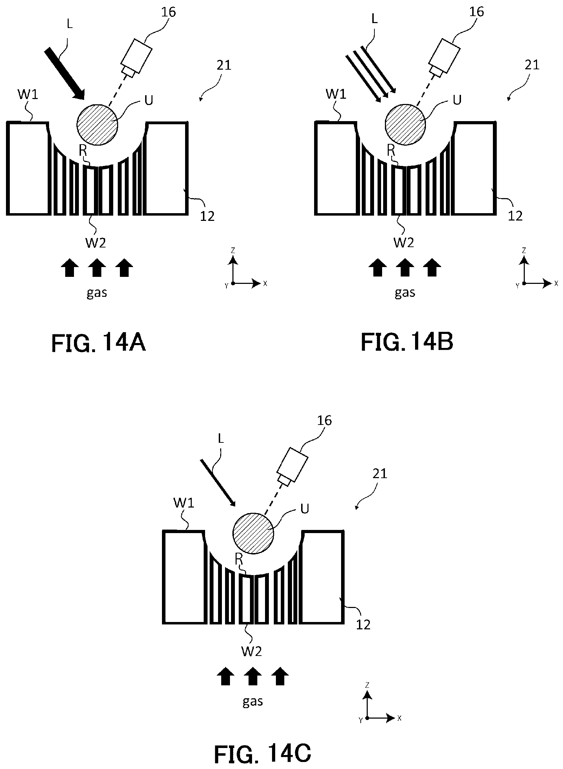

FIG. 14 illustrates diagrams explaining the heating control of the sample U in the first to tenth embodiments. FIG. 14A shows an example of a standard heating amount (example 1), FIG. 14B shows another example of a standard heating amount (example 2), and FIG. 14C shows an example where the heating amount is reduced. Note that, as described above, the processing target of the glass manufacturing apparatus 10 may be referred to as "sample U."

The control unit 22 of the glass manufacturing apparatus 10 functions as a heating control unit that controls the heating amount of the sample U by adjusting the output of the laser light source 13 based on temperature information from the radiation thermometer 16. By changing the heating amount, the control unit 22, for example, adjusts the temperature of the sample U to a level at or below the yield point and at or above the glass transition point. For instance, the control unit 22 can reduce the heating amount by lowering the output of the laser light source 13, thereby changing the state of the laser light L from that shown in FIG. 14A to that shown in FIG. 14C. As a result, the forming unit 30 forms the molten sample U whose temperature has changed based on the heating control by the control unit 22. The forming unit 30 can form the sample U while its temperature is decreasing. For example, the forming unit 30 forms the sample U when its temperature is at or below the yield point and at or above the glass transition point. The control unit 22 may also reduce the heating amount by setting the output of the laser light source 13 to zero.

Additionally, the control unit 22 may reduce the heating amount by decreasing the number of laser beams emitted from the laser light source 13, changing the state of the laser light L from that shown in FIG. 14B to that shown in FIG. 14C. As a result, similar to the example in FIG. 14A, the forming unit 30 shapes the molten sample U whose temperature has changed based on the heating control by the control unit 22.

Furthermore, the control unit 22 may reduce the heating amount by stopping the heating operation of some of multiple heating devices.

### <Melting step and Forming step>

In the first to tenth embodiments described above, during the melting step, the sample U, which is non-contact supported by the floating unit 21, is heated and melted by the heating unit (laser light source 13). In this process, the laser light source 13 may heat the sample U placed in contact with the support member 12 to at least partially melt it, then allow the floating unit 21 to float the sample U and continue heating. Alternatively, the floating unit 21 may first melt the sample U placed on the support member 12 and then float the molten sample U. The floating unit 21 may stop floating the sample U if the temperature conditions prevent devitrification. In other words, the floating unit 21 preferably non-contact supports the sample U at least until the raw materials contained in the sample U are completely melted and cooled to a temperature that prevents devitrification. This helps suppress devitrification caused by contact between the sample U and the support member 12 during the cooling process.

Furthermore, in the first to tenth embodiments described above, the forming step using the forming unit 30 may be performed after the irradiation of the laser light L is stopped or during irradiation. Additionally, even if the surface area of the sample U irradiated by the laser light L is limited, convection within the sample U can help achieve the desired temperature throughout the sample. The forming step should be performed at or above the glass transition point of the sample U and within a temperature range that prevents devitrification. The process may be executed while the sample U is floated by gas, meaning that it is not in contact with the support member 12, or while the sample U is in contact with the support member 12.

Furthermore, before or during forming by the forming unit 30, the control unit may be configured to either eject gas from the support member 12 or stop the gas ejection. The control unit ensures that gas ejection from the support member 12 is stopped at a timing that prevents devitrification of the sample U. If deformation or damage to the sample U due to gas ejection is to be prevented, stopping the gas ejection is preferable.

Additionally, the glass material that is either in contact with or non-contact supported by the support member 12 may be either a raw material that has not yet been vitrified or glass that has already undergone vitrification. When the glass material non-contact supported by the support member 12 is a raw material that has not been vitrified, it may be a pressed body of oxide raw material powder, a sintered body thereof, or an aggregate of crystals having the same composition as the desired glass.

### <Example>

Next, descriptions of specific examples will be provided. However, the present invention is not limited by the following examples.

### <Example 1>

First, raw materials of oxides were weighed to achieve a predetermined chemical composition and then mixed using an alumina mortar. The mixture was uniaxially pressed at 20 MPa to form cylindrical pellets. The obtained pellets were then sintered in an electric furnace at 1200°C in the atmosphere for 12 hours to produce a sintered body. While oxides were used as raw materials in this example, they are not limited to oxides. Specifically, hydroxides, carbonates, nitrates, sulfates, and phosphates may also be used as raw materials.

Next, the sintered body was coarsely crushed and placed on the support member 12 of the glass manufacturing apparatus 10 shown in FIG. 1. The raw material was then melted by irradiating a carbon dioxide laser from above while injecting air. The molten raw material formed an approximately spherical shape due to its surface tension and was floated by the gas pressure. Once the raw material was completely melted, the laser output was cut off, allowing the sample U to cool. At this point, the diameter φ and thickness t of the sample U were measured.

Subsequently, the forming member 31 shown in FIG. 3 was used to apply pressure around the sample U, followed by cooling. After cooling, the diameter φ and thickness t of the sample U were measured. No devitrification was observed in the obtained optical glass.

### <Example 2>

After weighing the separately specified raw materials, pellets were obtained by mixing them in the same manner as in Example 1. Then, in the same manner as in Example 1, the raw material was melted, and the sample U was obtained by stopping the laser output. The diameter φ and thickness t of the sample U were measured. Then, the sample U was suctioned from above using the suction unit 32 shown in FIG. 4, followed by cooling. After cooling, the diameter φ and thickness t of the sample U were measured.

Table 1 shows the composition of the raw materials used in each example.

**<Table 1>**

| mol% | Example 1 | Example 2 |
|---|---|---|
| SiO₂ | 16.61 | 16.29 |
| La₂O₃ | 17.07 | 16.72 |
| TiO₂ | 52.00 | 53.42 |
| ZrO₂ | 11.45 | 10.86 |
| Ta₂O₅ | 2.87 | 2.72 |

### <Evaluation>

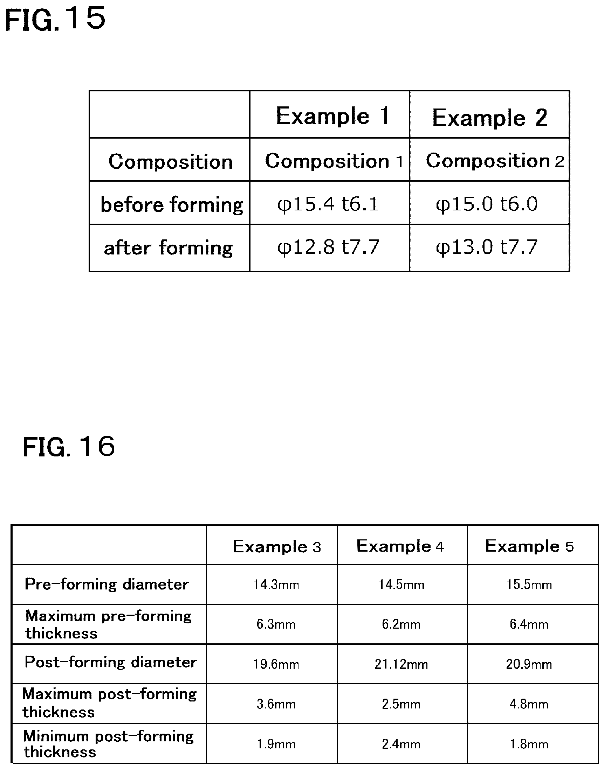

FIG. 15 illustrates the measurement results of the sample U obtained in Examples 1 and 2. According to FIG. 15, it was confirmed that the thickness of the sample U increased in all examples. Additionally, no devitrification was observed in any of the glass samples obtained in the examples.

From the above, it was confirmed that the glass manufacturing apparatus 10 used in each example enables the stable production of optical glass with the desired diameter and thickness.

### <Example 3>

After weighing the separately specified raw material (sample U in its raw material state), pellets were obtained by mixing them in the same manner as in Example 1. Then, in the same manner as in Example 1, the raw material was melted, and the sample U was cooled and obtained by stopping the laser output. The pre-forming diameter and the maximum pre-forming thickness were measured.

Subsequently, sample U was melted again by irradiating it from above with a carbon dioxide laser while injecting air. After shutting off the laser output, sample U was pressed from above using a forming member 382 with a concave-shaped tip, as shown in FIG. 9B, and then sufficiently cooled. A support member 12 with a flat central region of the concave surface R was used.

The post-formed diameter, which is the diameter of the sample U after cooling, the post-formed maximum thickness, which is the thickness at the thickest part, and the post-formed minimum thickness, which is the thickness at the thinnest part, were measured. No devitrification was observed in the optical glass obtained as a result of cooling.

### <Example 4>

After weighing the separately specified raw material (sample U in its raw material state), pellets were obtained by mixing them in the same manner as in Example 1. Then, in the same manner as in Example 1, the raw material was melted, and the sample U was cooled and obtained by stopping the laser output. The pre-forming diameter and the thickest part thickness before forming were measured.

Subsequently, sample U was melted again by irradiating it from above with a carbon dioxide laser while injecting air. After shutting off the laser output, sample U was pressed from above using a forming member 381 with a flat-shaped tip, as shown in FIG. 9A, and then sufficiently cooled. A support member 12 with a flat central region of the concave surface R was used.

The post-formed diameter, which is the diameter of the sample U after cooling, the post-formed maximum thickness, which is the thickness at the thickest part, and the post-formed minimum thickness, which is the thickness at the thinnest part, were measured. No devitrification was observed in the optical glass obtained as a result of cooling.

### <Example 5>

After weighing the raw material (sample U in its raw material state) as specified separately, it was mixed in the same manner as in Example 1 to obtain pellets. The raw material was then melted using the same method as in Example 1, and after stopping the laser output, the sample U was cooled. The preforming diameter and the maximum preforming thickness of the obtained sample U were measured.

Subsequently, the sample U was remelted by irradiating it from above with a CO₂ laser while injecting air. After stopping the laser output, the sample U was formed using the forming unit 30 shown in FIG. 11A, followed by sufficient cooling. That is, the forming unit 30 enclosed the sample U with auxiliary member 387 and applied pressure from above using forming member 386. The forming member 386 used had a convex shape at its tip, facing the sample U. The support member 12 used had a concave surface R with a flat central part.

After cooling, the post-forming diameter of sample U, the maximum post-forming thickness, and the minimum post-forming thickness were measured. No devitrification was observed in the obtained optical glass.

### <Example 6>

After weighing the raw material (sample U in its raw material state) as specified separately, it was mixed in the same manner as in Example 1 to obtain pellets. The raw material was then melted using the same method as in Example 1, and after stopping the laser output, two samples U were prepared. The weights of the obtained samples U1 and U2 were measured.

Sample U1 was melted by irradiating it from above with a CO₂ laser while injecting air, then the laser output was stopped, and pressure was applied from the surroundings using the forming member 31 shown in FIG. 3, followed by sufficient cooling. The diameter and thickness of the cooled sample U1 were measured. No devitrification was observed in the obtained optical glass.

Sample U2 was melted by irradiating it from above with a CO₂ laser while injecting air, then the laser output was stopped, and pressure was applied from the surroundings using the forming member 390 shown in FIG. 12, followed by sufficient cooling.

The thickness of the cooled sample U2, the diameter of the upper part U_{A}, and the diameter of the lower part U_{B} were measured. Similar to the support member 12 used in the forming of sample U1, the central part of the concave surface R of support member 12 was flat. No devitrification was observed in the optical glass obtained as a result of cooling. The upper part U_{A} and lower part U_{B} corresponded to the example shown in FIG. 12B.

Table 2 shows the composition of the raw materials in Examples 3 to 6.

**[Table 2]**

| mol% | Example 3 - 6 |
|---|---|
| SiO₂ | 14.13 |
| La₂O₃ | 14.24 |
| TiO₂ | 55.70 |
| ZrO₂ | 10.28 |
| Y₂O₃ | 4.11 |
| Al₂O₃ | 1.54 |

### <Evaluation>

FIG. 16 illustrates the measurement results of sample U obtained in Examples 3 to 5.

In Example 3, the shape of the forming member 382 was transferred to sample U, resulting in an optical glass where the center part had the maximum post-forming thickness and the edge part had the minimum post-forming thickness.

In Example 4, since the tip of the forming member 381 on the sample U side had a flat shape, the difference between the maximum post-forming thickness and the minimum post-forming thickness was smaller compared to the other examples.

In Example 5, the shape of the forming member 386 was transferred to sample U, resulting in optical glass where the center part had the minimum post-forming thickness and the edge part had the maximum post-forming thickness.

In Examples 3 to 5, the post-forming diameter increased compared to the preforming diameter, and the maximum post-forming thickness decreased compared to the maximum preforming thickness. From these results, it was confirmed that the glass manufacturing apparatus in each example could stably produce optical glass with the desired diameter and thickness.

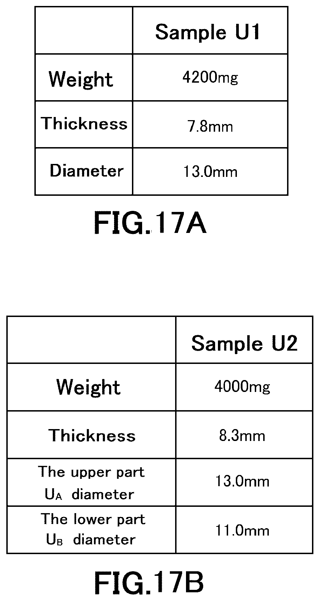

FIG. 17 shows the measurement results of samples U1 and U2 obtained in Example 6. FIG. 17A shows the measurement results of sample U1, and FIG. 17B shows the measurement results of sample U2. Sample U1 was formed using the forming member 31 in FIG. 3, which had a flat contact surface with sample U1, resulting in a nearly uniform diameter from top to bottom. Although samples U1 and U2 had the same weight, sample U2, which was formed using forming member 390, had a smaller lower part U_{B} diameter compared to sample U1 and had a greater thickness. Thus, it was confirmed that by using the forming member 390 shown in FIG. 12, optical glass with a desired shape having a smaller lower diameter could be stably produced.

In the above embodiment, in order to measure the shape of the glass before and after forming, the raw material is melted and then cooled to obtain the pre-formed sample U (or U1, U2). The sample U is then melted again, and forming is performed after stopping the laser. However, it is evident that forming can also be performed immediately after melting the raw material and stopping the laser, without going through the process of cooling to obtain the pre-formed sample U, thereby directly obtaining the post-formed sample U.

### <Optical Elements, Optical Systems, Interchangeable Camera Lenses, Optical Devices, etc.>

The optical glass obtained using the glass manufacturing apparatus 10 of each embodiment can be suitably used as an optical element included in optical equipment. Such optical elements include mirrors, lenses, prisms, filters, etc., and can be widely used in optical systems. The optical system according to this embodiment is suitably used as an interchangeable camera lens that includes it. Known structures may be adopted for such optical elements, optical lenses, and interchangeable camera lenses. Furthermore, the optical system according to this embodiment can be suitably used as an optical device that includes it. Examples of optical devices that include such optical systems are not particularly limited, but include imaging devices such as interchangeable-lens cameras and fixed-lens cameras, as well as optical microscopes. The following describes some examples of these applications.

### (Image Device)

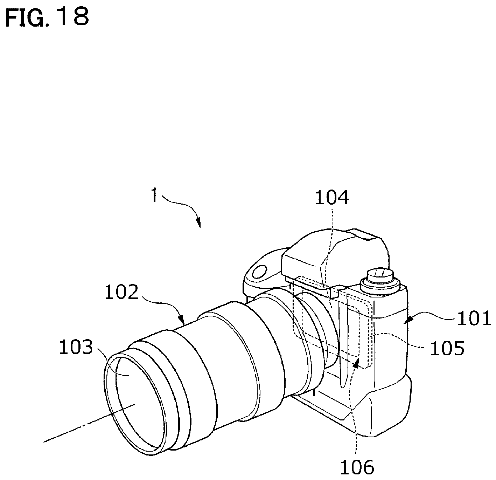

FIG. 18 is a perspective view illustrating an example of an image device using the optical apparatus according to each embodiment.

The image device 1 is a so-called digital single-lens reflex camera (interchangeable-lens camera), and the photographing lens (optical system) 103 includes the cured product according to the present embodiment. A lens barrel 102 is detachably attached to a lens mount (not shown) of a camera body 101. Light passing through the lens 103 of the lens barrel 102 is focused on a sensor chip (solid-state image sensor) 104 of a multi-chip module 106 disposed on the rear side of the camera body 101. The sensor chip 104 is a so-called bare chip, such as a CMOS image sensor, and the multi-chip module 106 is, for example, a COG (Chip On Glass) type module in which the sensor chip 104 is mounted as a bare chip on a glass substrate 105.

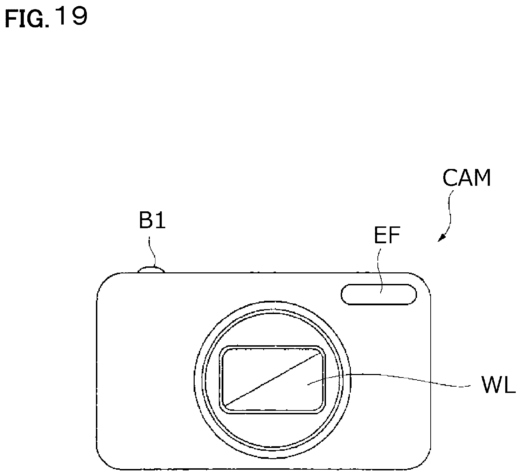

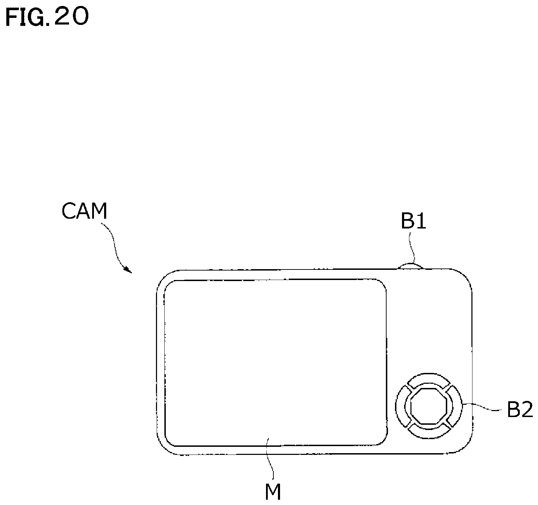

FIG. 19 is another example of a front view of an image device using the optical apparatus according to each embodiment, and FIG. 20 is a rear view of the image device.

The image device CAM is a so-called digital still camera (non-interchangeable-lens camera), and the photographing lens (optical system) WL includes the cured product according to the present embodiment. When a power button (not shown) of the image device CAM is pressed, a shutter (not shown) of the photographing lens WL opens, allowing light from a subject (object) to be collected by the photographing lens WL and focused onto an image sensor disposed on the image plane. The subject image focused on the image sensor is displayed on a liquid crystal monitor M disposed at the back of the image device CAM. The photographer determines the composition of the subject image while viewing the liquid crystal monitor M, then presses the release button B1 to capture the subject image with the image sensor and record it in a memory (not shown). The image device CAM is equipped with an auxiliary light emission unit EF that emits auxiliary light when the subject is dark, and a function button B2 used for various setting conditions of the image device CAM.

Optical systems used in digital cameras and the like require higher resolution, weight reduction, and miniaturization. To achieve these, using high-refractive-index optical glass in the optical system is effective. From this perspective, the optical glass according to each embodiment is suitable as a component of such optical devices. Furthermore, applicable optical devices are not limited to the above-described image devices; for example, projectors are also included. Optical elements are not limited to lenses but also include prisms and other components.

### (Multiphoton Microscope)

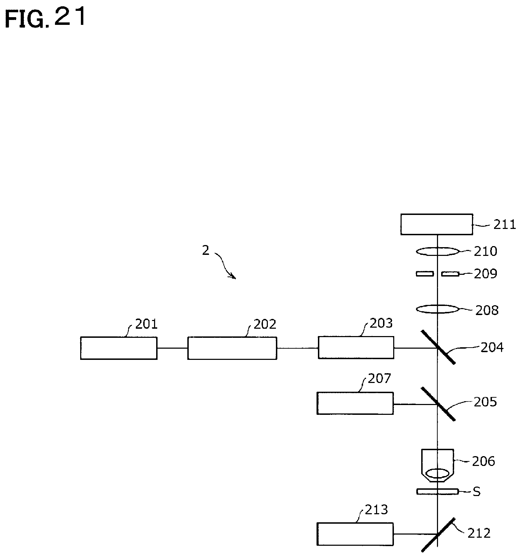

FIG. 21 is a block diagram illustrating an example of a multiphoton microscope using the optical apparatus according to each embodiment.

The multiphoton microscope 2 includes an objective lens 206, a condenser lens 208, and an imaging lens 210 as optical elements. The optical system of the multiphoton microscope 2 will be described below.

A pulse laser device 201 emits ultrashort pulse light, for example, at a near-infrared wavelength (approximately 1000 nm) with a pulse width in the femtosecond range (e.g., 100 femtoseconds). The ultrashort pulse light immediately after being emitted from the pulse laser device 201 is generally linearly polarized in a predetermined direction.

A pulse splitter 202 splits the ultrashort pulse light and increases its repetition frequency before emitting it.

A beam adjustment unit 203 performs the following functions: adjusting the beam diameter of the ultrashort pulse light incident from the pulse splitter 202 to match the pupil diameter of the objective lens 206, adjusting the focusing and divergence angle of the ultrashort pulse light to correct axial chromatic aberration (focus difference) between the multiphoton excitation light emitted from the sample S and the ultrashort pulse light, and providing pre-chirp functionality (group velocity dispersion compensation function) to compensate for the broadening of the pulse width due to group velocity dispersion while passing through the optical system.

The ultrashort pulse light emitted from the pulse laser device 201 has its repetition frequency increased by the pulse splitter 202 and is then adjusted by the beam adjustment unit 203 as described above. The ultrashort pulse light emitted from the beam adjustment unit 203 is reflected by a dichroic mirror 204 toward a dichroic mirror 205, passes through the dichroic mirror 205, and is condensed by the objective lens 206 to irradiate the sample S. At this time, scanning means (not shown) may be used to scan the ultrashort pulse light across the observation plane of the sample S.

For example, when performing fluorescence observation of the sample S, multiphoton excitation occurs in the fluorescent dye staining the sample S within the irradiated region of the ultrashort pulse light and its vicinity, thereby emitting fluorescence (hereinafter referred to as "observation light") with a wavelength shorter than the near-infrared wavelength of the ultrashort pulse light.

The observation light emitted from the sample S toward the objective lens 206 is collimated by the objective lens 206 and is either reflected or transmitted by the dichroic mirror 205 depending on its wavelength.

The observation light reflected by the dichroic mirror 205 enters the fluorescence detection unit 207, which consists of a barrier filter, a photomultiplier tube (PMT), or the like. The fluorescence detection unit 207 receives the reflected observation light and outputs an electrical signal corresponding to its intensity while scanning across the observation surface of the sample S.

On the other hand, the observation light transmitted through the dichroic mirror 205 is descanned by scanning means (not shown), passes through dichroic mirror 204, and is focused by a condenser lens 208. It then passes through a pinhole 209 positioned conjugate to the focal position of the objective lens 206 before entering the fluorescence detection unit 211 through an imaging lens 210.

The fluorescence detection unit 211 is configured using, for example, a barrier filter and a photomultiplier tube (PMT). It receives the observation light that is focused onto its light-receiving surface by the imaging lens 210 and outputs an electrical signal corresponding to the light intensity. Additionally, the fluorescence detection unit 211 detects the observation light across the observation plane of the sample S in synchronization with the scanning of the ultrashort pulse light on the observation plane of the sample S.

By removing the dichroic mirror 205 from the optical path, all observation light emitted from the sample S toward the objective lens 206 can be detected by the fluorescence detection unit 211.

Additionally, the observation light emitted from the sample S in the direction opposite to the objective lens 206 is reflected by the dichroic mirror 212 and enters the fluorescence detection unit 213. The fluorescence detection unit 213 is configured using, for example, a barrier filter and a photomultiplier tube (PMT). It receives the observation light reflected by the dichroic mirror 212 and outputs an electrical signal corresponding to the light intensity. Furthermore, the fluorescence detection unit 213 detects the observation light across the observation plane of the sample S in synchronization with the scanning of the ultrashort pulse light on the observation plane of the sample S.

The electrical signals from fluorescence detection units 207, 211, and 213 are input to a computer (not shown), which processes them to generate, display, and store observation images.

### <Cemented Lens>

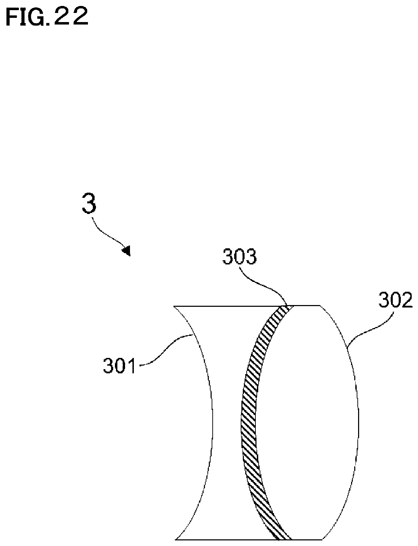

FIG. 22 is a schematic diagram illustrating an example of a cemented lens according to the embodiments. The cemented lens 3 is a composite lens comprising a first lens element 301 and a second lens element 302. At least one of the first and second lens elements uses the optical glass according to the embodiments. The first and second lens elements are bonded together via a bonding member 303. A known adhesive or similar material can be used as the bonding member 303. It should be noted that the lenses constituting the cemented lens may be referred to as "lens elements" to clearly indicate their role as components of the cemented lens.

The cemented lens according to the embodiments is useful for chromatic aberration correction and is well suited for use in the aforementioned optical elements, optical systems, and optical devices. Furthermore, an optical system including the cemented lens is particularly suitable for use in interchangeable camera lenses and optical devices. While the above description explains a cemented lens with two lens elements, the invention is not limited to this configuration, and a cemented lens with three or more lens elements may also be used. When using three or more lens elements, at least one of them should be formed using the optical glass according to the present embodiment.

The following describes several aspects of the present disclosure.
(1) A glass manufacturing apparatus configured to produce glass through a process of lowering the temperature of a non-contact supported glass raw material, comprising:
   a heating unit configured to heat the glass raw material;
   a heating control unit configured to control the amount of heating by the heating unit; and
   a forming unit configured to shape the molten glass raw material whose temperature has changed based on the control of the heating amount by the heating control unit.
(2) The glass manufacturing apparatus according to (1), wherein the forming unit is configured to shape the molten glass raw material during a period in which the temperature of the glass raw material decreases due to a reduction in heating amount by the heating control unit.
(3) The glass manufacturing apparatus according to (2), wherein the heating unit is configured to heat the glass raw material using multiple heating devices, and the heating control unit is configured to reduce the heating amount by stopping heating from some of the multiple heating devices.
(4) The glass manufacturing apparatus according to any one of (1) to (3), wherein the heating control unit is configured to change the heating amount of the heating unit to adjust the temperature of the molten glass raw material to at or below the yield point, and the forming unit is configured to shape the molten glass raw material at a temperature at or below the yield point.
(5) The glass manufacturing apparatus according to any one of (1) to (4), wherein the heating control unit is configured to change the heating amount of the heating unit to adjust the temperature of the molten glass raw material to at or above the glass transition point, and the forming unit is configured to shape the molten glass raw material at a temperature at or above the glass transition point.
(6) The glass manufacturing apparatus according to any one of (1) to (5), wherein the forming unit includes a forming member configured to shape the molten glass raw material by pressing it against the molten glass raw material.
(7) The glass manufacturing apparatus according to (6), wherein the forming unit includes multiple forming members configured to press against the molten glass raw material to shape it.
(8) The glass manufacturing apparatus according to (7), wherein the forming unit includes at least four forming members configured to be driven within a predetermined plane to shape the molten glass raw material.
(9) The glass manufacturing apparatus according to any one of (6) to (8), wherein the forming members are configured to have an arc shape.
(10) The glass manufacturing apparatus according to any one of (6) to (9), wherein the forming members are configured to have an L-shaped cross-section in the gravitational direction.
(11) The glass manufacturing apparatus according to (6), wherein the forming unit is configured to press the forming members against the molten glass raw material from above to shape it.
(12) The glass manufacturing apparatus according to (11), further comprising a support unit configured to support the glass raw material in both contact and non-contact manners, wherein the forming unit is configured to press the forming members against the molten glass raw material from above and shape it by sandwiching it between the support unit and the forming members.
(13) The glass manufacturing apparatus according to (11) or (12), wherein the forming unit includes an auxiliary member configured to surround the molten glass raw material, and the forming members are configured to press against the molten glass raw material enclosed by the auxiliary member to shape it.
(14) The glass manufacturing apparatus according to (13), wherein the auxiliary member is cylindrical.
(15) The glass manufacturing apparatus according to (6), wherein the forming unit is configured to press a first forming member against the molten glass raw material from above and to drive multiple forming members different from the first forming member within a predetermined plane intersecting the gravitational direction to shape the molten glass raw material.
(16) The glass manufacturing apparatus according to any one of (1) to (5), wherein the forming unit includes a suction unit configured to form the molten glass raw material by suction.
(17) The glass manufacturing apparatus according to (16), wherein the forming unit is cylindrical.
(18) The glass manufacturing apparatus according to (16) or (17), wherein the forming unit includes the suction unit and a forming member configured to form the molten glass raw material.
(19) The glass manufacturing apparatus according to (18), wherein the suction unit is configured to surround the forming members in a plane orthogonal to the gravitational direction.
(20) The glass manufacturing apparatus according to any one of (1) to (19), further comprising a support unit configured to support the glass raw material in both contact and non-contact manners, wherein the support unit includes an ejection port configured to eject gas, and the glass raw material is supported in a non-contact manner by the gas ejected from the ejection port.
(21) The glass manufacturing apparatus according to (20), wherein the support unit is configured to stop gas ejection before or during the forming of the glass raw material by the forming unit.
(22) The glass manufacturing apparatus according to any one of (6) to (15), (18), or (19), wherein the melting point of the forming members is 500 degrees Celsius or higher.
(23) The glass manufacturing apparatus according to any one of (6) to (15), (18), (19), or (22), wherein the forming members are made of aluminum alloy.
(24) The glass manufacturing apparatus according to any one of (1) to (23), further comprising a support unit configured to support the glass raw material in both contact and non-contact manners, wherein the support unit is configured to support the glass raw material in a non-contact manner using electrostatic force.
(25) The glass manufacturing apparatus according to any one of (1) to (24), wherein the heating unit is configured to heat the non-contact supported glass raw material.
(26) The glass manufacturing apparatus according to any one of (1) to (25), wherein the heating unit is a laser.
(27) The glass manufacturing apparatus according to any one of (1) to (26), wherein the glass raw material is a press-molded body, a sintered body thereof, or an aggregate of crystals.
(28) Glass manufactured using the glass manufacturing apparatus according to any one of (1) to (27).
(29) An optical system using the glass according to (28).
(30) An optical device using the optical system according to (29).
(31) A glass manufacturing method for manufacturing glass using the glass manufacturing apparatus according to any one of (1) to (27).
(32) A glass manufacturing method configured to produce glass through a process of lowering the temperature of a non-contact supported glass raw material, comprising
   a melting step in which the glass raw material is heated and melted by a heating unit,
   a heating control step in which the heating amount of the glass raw material by the heating unit is controlled, and
   a forming step in which the molten glass raw material, whose temperature has changed due to the control of the heating amount in the heating control step, is shaped.
(33) The glass manufacturing method according to (32), wherein in the forming step, the molten glass raw material is formed by the forming unit at or above the glass transition point and at or below the yield point.
(34) A glass manufacturing apparatus configured to produce glass by cooling the glass raw material, comprising
   a support member configured to non-contact support the molten glass raw material and
   a stage to which the support member is fixed, wherein the support member is detachable from the stage.
(35) The glass manufacturing apparatus according to (34), wherein the support member is fixed to the stage using a screw structure.
(36) The glass manufacturing apparatus according to (35), further comprising a second support member configured to non-contact support the molten glass raw material, wherein the second support member is fixed to the stage after the first support member is removed.
(37) The glass manufacturing apparatus according to (35) or (36), further comprising
   a fixing member for fixing the support member to the stage, wherein the stage supports the support member from below and the fixing member is provided above the support member.
(38) The glass manufacturing apparatus according to (37), wherein the fixing member is made of stainless steel SUS or an aluminum alloy.
(39) The glass manufacturing apparatus according to any one of (34)
   to (38), further comprising a gas supply unit configured to supply gas for floating the molten glass raw material, wherein the support member includes an ejection port from which the supplied gas is ejected and the molten glass raw material is floated and non-contact supported above the support member by the gas ejected from the ejection port.
(40) The glass manufacturing apparatus according to any one of (34) to (39), wherein the support member is made of stainless steel SUS, aluminum alloy, silicon carbide SiC, or brass.

### [Explanation of Symbols]

1... Imaging device (interchangeable-lens camera)
10... Glass manufacturing apparatus
11... Stage
12... Support member
13... Laser light source
14, 15... Mirrors
16... Infrared thermometer
17... Computer
18... CCD camera
19... Monitor
20... Gas flow regulator
21... Floating unit
L... Laser light
22... Control unit
23... Calculation unit
24... Nozzle outlet
R... Concave surface
U... Sample
W1... First surface
W2... Second surface
30... Forming unit
31a, 31b, 31c, 31d, 31e, 31f, 31g, 31h, 33, 35, 35a, 35b, 36a,
36b, 381, 382, 383, 384, 385, 386, 390... Forming member
387... Auxiliary member
388... First formed member
389... Second formed member
112... Fixing wall
121... Base portion
122... Locking portion
25... Fixing member
25a... Horizontal plane
25b... Side surface
32... Suction unit
34, 111... Nozzles
37... Division unit
101... Camera body
102... Lens barrel
103... Lens
104... Sensor chip
105... Glass substrate
106... Multi-chip module
H... Hole
T... Lens
CAM... Imaging device (non-interchangeable-lens camera)
WL... Photographic lens
M... LCD monitor
EF... Auxiliary light-emitting unit
B1... Release button
B2... Function button
2... Multiphoton microscope
201... Pulsed laser apparatus
202... Pulse splitting apparatus
203... Beam adjustment unit
204, 205, 212... Dichroic mirrors
206... Objective lens
207, 211, 213... Fluorescence detection unit
208... Condensing lens
209... Pinhole
210... Imaging lens
S, U... Sample
U_{A}... Upper portion
U_{B}... Lower portion
3... Cemented lens
301... First lens element
302... Second lens element
303... Bonding member

## Claims

1. A glass manufacturing apparatus configured to manufacture glass through a process of lowering the temperature of a non-contact supported glass material, comprising:
a heating unit configured to heat the glass material; and
a forming unit configured to form the molten glass material while its temperature decreases.

2. The glass manufacturing apparatus according to claim 1,
wherein the forming unit is configured to form the molten glass material after the heating by the heating unit is stopped.

3. The glass manufacturing apparatus according to claim 1 or 2, comprising a control unit configured to control the forming unit, wherein the control unit controls the forming unit based on conditions using predetermined characteristics of the glass.

4. The glass manufacturing apparatus according to claim 3,
wherein the control unit includes a calculation unit configured to calculate the timing to form the molten glass material based on the conditions, and is configured to control the forming unit to form the molten glass material at the calculated timing.

5. The glass manufacturing apparatus according to claim 3,
wherein the control unit includes a measurement unit configured to measure the temperature of the molten glass material, and is configured to determine the timing to form the molten glass material based on the measurement result of the measurement unit and the conditions, and to control the forming unit to form the molten glass material at the determined timing.

6. The glass manufacturing apparatus according to any one of claims 3 to 5,
wherein the predetermined characteristic is the yield point of the glass.

7. The glass manufacturing apparatus according to any one of claims 3 to 6,
wherein the condition is that the temperature of the molten glass material is at or below the yield point of the glass, and the control unit is configured to control the forming unit to form the molten glass material under the condition being met.

8. The glass manufacturing apparatus according to claim 7,
wherein the predetermined characteristic is the glass transition temperature of the glass.

9. The glass manufacturing apparatus according to claim 8,
wherein the condition is that the temperature of the molten glass material is at or below the yield point of the glass and at or above the glass transition temperature, and the control unit is configured to control the forming unit to form the molten glass material under the condition being met.

10. A glass manufacturing apparatus configured to manufacture glass through a process of lowering the temperature of a non-contact supported glass material, comprising:
a heating unit configured to heat the glass material;
a heating control unit configured to control the heating amount by the heating unit; and
a forming unit configured to form the molten glass material whose temperature has changed based on the control of the heating amount by the heating control unit.

11. The glass manufacturing apparatus according to claim 10,
wherein the forming unit is configured to form the molten glass material during the period when the temperature of the glass material decreases due to control by the heating control unit to reduce the heating amount.

12. The glass manufacturing apparatus according to claim 11,
wherein the heating unit is configured to heat the glass material using multiple heating devices, and the heating control unit is configured to reduce the heating amount by stopping heating by some of the multiple heating devices.

13. The glass manufacturing apparatus according to any one of claims 10 to 12,
wherein the heating control unit is configured to change the temperature of the molten glass material to at or below the yield point of the glass by adjusting the heating amount of the heating unit, and the forming unit is configured to form the molten glass material at or below the yield point.

14. The glass manufacturing apparatus according to any one of claims 10 to 13,
wherein the heating control unit is configured to change the temperature of the molten glass material to at or above the glass transition temperature by adjusting the heating amount of the heating unit, and the forming unit is configured to form the molten glass material at or above the glass transition temperature.

15. The glass manufacturing apparatus according to any one of claims 1 to 14,
wherein the forming unit includes a forming member configured to form the molten glass material and is configured to form the molten glass material by pressing the forming member against the molten glass material.

16. The glass manufacturing apparatus according to claim 15,
wherein the forming unit includes multiple forming members, and is configured to form the molten glass material by pressing the multiple forming members against the molten glass material.

17. The glass manufacturing apparatus according to claim 16,
wherein the forming unit includes four or more forming members and is configured to form the molten glass material by driving the multiple forming members within a predetermined plane.

18. The glass manufacturing apparatus according to any one of claims 15 to 17,
wherein the forming members have an arcuate form.

19. The glass manufacturing apparatus according to any one of claims 15 to 18,
wherein the cross-section of the forming member in the direction of gravity is L-shaped.

20. The glass manufacturing apparatus according to claim 15,
wherein the forming unit is configured to form the molten glass material by pressing the forming member against the molten glass material from above.

21. The glass manufacturing apparatus according to claim 20, comprising
a support unit configured to support the glass material in both contact and non-contact modes,
wherein the forming unit is configured to form the molten glass material by pressing the forming member against the molten glass material's top while sandwiching the molten glass material between the forming member and the support unit.

22. The glass manufacturing apparatus according to claim 20 or 21,
wherein the forming unit includes an auxiliary member configured to surround the molten glass material, and the forming unit is configured to press the forming member against the molten glass material surrounded by the auxiliary member to form the molten glass material.

23. The glass manufacturing apparatus according to claim 22, wherein the auxiliary member is configured to be tubular.

24. The glass manufacturing apparatus according to claim 15,
wherein the forming unit is configured to press a first forming member against the top of the molten glass material and drive multiple other forming members in a predetermined plane intersecting the gravity direction to press against the molten glass material, to form the molten glass material.

25. The glass manufacturing apparatus according to any one of claims 1 to 14, wherein the forming unit includes a suction unit configured to form the molten glass material by suction.

26. The glass manufacturing apparatus according to claim 25, wherein the forming unit is cylindrical.

27. The glass manufacturing apparatus according to claim 25 or 26,
wherein the forming unit includes the suction unit and a forming member configured to form the molten glass material.

28. The glass manufacturing apparatus according to claim 27,
wherein the suction unit of the forming unit is disposed around the forming member in a plane perpendicular to the gravity direction.

29. The glass manufacturing apparatus according to any one of claims 1 to 14,
wherein the forming unit includes a nozzle configured to blow gas onto the non-contact supported molten glass material to form the molten glass material by the gas blew by the nozzle.

30. The glass manufacturing apparatus according to any one of claims 1 to 14, comprising
a support unit configured to support the glass material in both contact and non-contact modes,
wherein the support unit includes a support member configured to non-contact support the molten glass material, and a division unit configured to divide the support member in a plane perpendicular to gravity, wherein the division unit is configured to divide the support member in the plane while non-contact supporting the molten glass material, and
wherein the forming unit includes multiple forming members configured to form the molten glass material by pressing from at least two directions while the molten glass material falls from the support member.

31. The glass manufacturing apparatus according to any one of claims 1 to 14, comprising
a support unit configured to support the glass material in both contact and non-contact modes,
wherein the support unit includes a support member configured to non-contact support the molten glass material, and a division unit configured to divide the support member in a plane perpendicular to gravity, wherein the division unit is configured to divide the support member in the plane while non-contact supporting the molten glass material, and
the forming unit includes multiple forming members configured to form the molten glass material by introducing the molten glass material, which has fallen from the support member, into the forming members.

32. The glass manufacturing apparatus according to any one of claims 1 to 31, comprising
a support unit configured to support the glass material in both contact and non-contact modes,
wherein the support unit includes an outlet configured to eject gas to support the glass material in a non-contact manner.

33. The glass manufacturing apparatus according to claim 32,
wherein the support unit is configured to stop the gas ejection before or during the forming process by the forming unit.

34. The glass manufacturing apparatus according to any one of claims 15 to 24, 27, 28, 30, 31,
wherein the forming members have a melting point of 500°C or more.

35. The glass manufacturing apparatus according to any one of claims 15 to 24, 27, 28, 30, 31, 34,
wherein the forming members are made of aluminum alloy.

36. The glass manufacturing apparatus according to any one of claims 1 to 35, comprising
a support unit configured to support the glass material in both contact and non-contact modes,
wherein the support unit is configured to support the glass material in a non-contact manner using electrostatic force.

37. The glass manufacturing apparatus according to any one of claims 1 to 36, wherein the heating unit is configured to heat the non-contact supported glass material.

38. The glass manufacturing apparatus according to any one of claims 1 to 37, wherein the heating unit is a laser.

39. The glass manufacturing apparatus according to any one of claims 1 to 38, wherein the glass material is a pressed body, its sintered body, or an aggregate of crystals.

40. A glass manufactured by the glass manufacturing apparatus according to any one of claims 1 to 39.

41. An optical system comprising the glass according to claim 40.

42. An optical device comprising the optical system according to claim 41.

43. A glass manufacturing method using the glass manufacturing apparatus according to any one of claims 1 to 39.

44. A glass manufacturing method for manufacturing glass through a process of lowering the temperature of a non-contact supported glass material, comprising:
a melting step of heating and melting the glass material with a heating unit; and
a forming step of forming the molten glass material while its temperature decreases.

45. The glass manufacturing method according to claim 44, comprising a stopping step of stopping the heating of the glass material by the heating unit, wherein the forming step is performed after the stopping step.

46. The glass manufacturing method according to claim 44 or 45, wherein the forming step is performed at or above the glass transition point and at the yield point of the glass.

47. A glass manufacturing method for manufacturing glass through a process of lowering the temperature of a non-contact-supported glass material, comprising:
a melting step of heating and melting the glass material;
a cooling step of lowering the temperature of the molten glass material to obtain the glass;
a reheating step of heating and melting the glass; and
a forming step of forming the molten glass while its temperature decreases.

48. The glass manufacturing method according to claim 47, wherein in the forming step, the molten glass is formed at a temperature at or above the glass transition point and at or below the yield point.

49. A glass manufacturing method for manufacturing glass through a process of lowering the temperature of a non-contact-supported glass material, comprising:
a melting step of heating and melting the glass material with a heating unit;
a heating control step of controlling the heating amount of the glass material by the heating unit; and
a forming step of forming the molten glass material whose temperature has changed due to the control of the heating amount in the heating control step.

50. The glass manufacturing method according to claim 49, wherein in the forming step, the forming unit forms the molten glass material at a temperature at or above the glass transition point and at or below the yield point.

51. A glass manufacturing apparatus for manufacturing glass by cooling a glass material, comprising:
a support member for non-contact-supporting the molten glass material; and
a stage to which the support member is fixed,
wherein the support member is detachable from the stage.

52. The glass manufacturing apparatus according to claim 51, wherein the support member is fixed to the stage by a screw structure.

53. The glass manufacturing apparatus according to claim 51 or 52, comprising
a second support member different from the first support member, the second support member also non-contact-supporting the molten glass material,
wherein the second support member is fixed to the stage after the first support member is removed.

54. The glass manufacturing apparatus according to any one of claims 51 to 53, comprising
a fixing member configured to secure the support member to the stage, wherein the stage supports the support member from below, and the fixing member is disposed above the support member.

55. The glass manufacturing apparatus according to claim 54, wherein the fixing member is made of stainless steel (SUS) or an aluminum alloy.

56. The glass manufacturing apparatus according to any one of claims 51 to 55, comprising
a gas supply unit configured to supply gas for floating the molten glass material,
wherein the support member includes an outlet for ejecting the gas supplied by the gas supply unit, and the molten glass material is non-contact supported above the support member by the ejected gas.

57. The glass manufacturing apparatus according to any one of claims 51 to 56, wherein the support member is made of stainless steel (SUS), aluminum alloy, silicon carbide (SiC), or brass.

58. A glass manufacturing method using the glass manufacturing apparatus according to any one of claims 51 to 57.
